(19) Europäisches Patentamt / European Patent Office / Office européen des brevets

(11) **EP 2 514 591 A1**

(12) **EUROPEAN PATENT APPLICATION**
published in accordance with Art. 153(4) EPC

(43) Date of publication:
**24.10.2012 Bulletin 2012/43**

(21) Application number: **10837447.1**

(22) Date of filing: **01.12.2010**

(51) Int Cl.:
***B32B 27/34*** (2006.01)     ***B32B 5/18*** (2006.01)
***C08J 9/28*** (2006.01)

(86) International application number:
**PCT/JP2010/071492**

(87) International publication number:
**WO 2011/074418 (23.06.2011 Gazette 2011/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2009 JP 2009283203**

(71) Applicant: **Daicel Corporation**
**Osaka-shi, Osaka 530-0001 (JP)**

(72) Inventor: **YAMATO, Yo**
**Himeji-shi**
**Hyogo 671-1283 (JP)**

(74) Representative: **Grünecker, Kinkeldey,**
**Stockmair & Schwanhäusser**
**Leopoldstrasse 4**
**80802 München (DE)**

(54) **LAMINATED BODY COMPRISING POROUS LAYER AND FUNCTIONAL LAMINATE USING SAME**

(57) Provided are a porous layer layered body improved very much in film strength, heat resistance, chemical resistances, and others as well as in the adhesion between its substrate and its porous layer by the formation of a crosslinked structure; a production process thereof; a functional laminate using the porous layer layered body; and a production process thereof. The layered body is a layered body including a base, and a porous layer on at least one surface of the base; and further the base is a resin film made of at least one resin material selected from the group consisting of polyimide resins, polyamideimide resins, polyamide resins, and polyetherimide resins, or is a metal foil piece, and the porous layer is made of a composition containing at least one polymer selected from the group consisting of polyimide resins, polyamideimide resins, polyamide resins, and polyetherimide resins as a main component, and a crosslinking agent. Additionally, the porous layer has fine pores having an average pore diameter of 0.01 to 10 $\mu$m, and a porosity of 30 to 85%.

Fig. 2

Porous Layer

Part of PI Film

Magnification; x 2000

×2.0k     30μm

EP 2 514 591 A1

**Description**

Technical Field

The present invention relates to a layered body having, on its base, a porous layer made mainly of a polymer, a process for producing the layered body, a functional laminate using the layered body having the porous layer, and a process for producing the laminate.

The layered body with a porous layer of the present invention makes good use of the pore properties of the porous layer, thereby being used as a substrate material in a wide range of fields of a low-permittivity material, a separator, a cushion material, an ink-image receiving sheet, an electrically insulating material, a heat insulating material, and others. Furthermore, when a surface of the porous layer is functionalized, the layered body can be used as a substrate for a circuit, a heat radiating material (such as a heat sink or a heat radiating plate), an electromagnetic wave controlling material such as an electromagnetic wave shield or an electromagnetic wave absorbent, an antenna, a cell culture substratum, or some other.

The layered body with a porous layer of the present invention exhibits excellent printability through fine pores in the porous layer, so that a functional material can be finely printed onto the porous layer. Thus, the layered body is useful particularly for a substrate material of the following articles out of the above-mentioned articles: an electromagnetic wave controlling material, a circuit substrate, an antenna, a heat radiating plate, and some other.

Background Art

As a layered body composed of a base and a porous layer, for example, JP-A (i.e., Japanese Patent Application Laid-Open)-2000-143848, and JP-A-2000-158798 each disclose an ink-image receiving sheet produced by subjecting a painted film containing a resin which is to constitute a porous layer, a solvent good for this resin, and a solvent poor therefor to a dry phase transition technique, thereby forming the porous layer.

The dry phase transition technique disclosed in the two publications is a technique of volatilizing the solvents contained in the painted film to generate micro-phase separation. Thus, the technique has a problem that the resin (polymeric compound), which is to constitute the porous layer, is limited to a resin soluble in a good solvent having a low boiling point, so that a polymeric compound large in molecular weight, which is essentially slightly soluble, cannot be used. A painting solution low in viscosity is preferably used in order that the polymeric compound can be dissolved therein and further a solvent therein can be rapidly vaporized after the formation of the painted film; as a result, however, the following inconveniences are caused: this painted film cannot easily have a sufficient thickness; out of constituting components of the painted film, components that are not removed when the solvent is vaporized remain in the porous layer, so that a nonvolatile additive is not easily usable; and the structure of the yielded porous layer depends largely on heating conditions and production environmental conditions in the production process, so that the porous layer is not stably produced with ease, thereby resulting in a tendency that porous layers produced by the technique are varied in qualities, such as pore diameter, rate of open area, porosity, and thickness.

In connection with a layered body composed of a base and a porous layer and produced by a technique other than the above-mentioned technique, International Publication WO98/25997 discloses a process for producing a layered body by a phase transition technique of drying a painted film in a high humidity at two stages, this film being yielded by casting a raw material on a base.

According to the phase transition technique disclosed in WO98/25997, production environmental conditions can be stabilized; however, the above-mentioned problems in the dry phase transition technique, such as a variation in film qualities, cannot be solved since the technique basically makes use of a heating and drying manner.

In the case of considering the usage of the layered body disclosed in WO98/25997, the inventor's investigations have made the following evident: in the case of bonding a copper foil piece onto the layered body to prepare a copper clad layered plate, and then etching the plate to form a circuit pattern, it is feared that a sufficient bonding strength can not be exhibited between the copper foil piece and the layered body since the porous layer is weak in strength.

When the layered body disclosed in WO98/25997 is used as a cushion material, the film thickness of the layered body is not easily made large since the layered body is formed by use of a low-viscosity painting solution. Thus, it is difficult to cause the layered body to exhibit sufficient cushion performance.

International Publication WO2007/097249 discloses a layered body composed of a base and a porous layer and produced by a wet phase transition technique.

JP-A-2004-175104 discloses a porous membrane made only of a porous layer produced by a wet phase transition technique.

JP-A-2009-73124 discloses a layered body composed of a base and a porous layer and produced by a wet phase transition technique, and discloses a porous membrane made only of a porous layer produced by a wet phase transition technique.

Patent Literature 1: JP-A-2000-143848
Patent Literature 2: JP-A-2000-158798
Patent Literature 3: International Publication WO98/25997
Patent Literature 4: International Publication WO2007/097249
Patent Literature 5: JP-A-2004-175104
Patent Literature 6: JP-A-2009-73124
Patent Literature 7: JP-A-2006-237322

Disclosure of the Invention

Problems to be Solved by the Invention

According to the wet phase transition techniques disclosed in the International Publication WO2007/097249, JP-A-2004-175104 and JP-A-2009-73124, many advantages as described in the following are produced: a polymeric compound high in molecular weight, which is essentially slightly soluble, may be used; a nonvolatile additive, which has an advantageous effect for the formation of pores, may be used; conditions for the production environment can be stabilized so that the resultants can be stabilized in qualities; a porous layer can be produced which is larger in thickness than porous layers produced by a dry phase transition technique; a porous layer can be produced which is higher in strength than porous layers produced by a dry phase transition technique; and the porous layer can be made large in film thickness to be improved in cushion performance.

However, the porous layer is made of a polymeric compound soluble in water-soluble polar solvents, so that the porous layer may be dissolved or swelled in a water-soluble polar solvent. Thus, the porous layer is not easily used depending on the usage of the layered body.

The layered bodies disclosed in the International Publication WO2007/097249 and JP-A-2009-73124 may each be used as a wiring board or some other. The base and the porous layer thereof are not peeled from each other in an ordinary process at the time of integrating the layered body into a target product, or in the use of the layered body. Moreover, the adhesion between the base and the porous layer can also be made higher by post-treatment.

However, the bonding at the interface between the base and the porous layer depends on the bonding property which the polymer constituting the porous layer has. Thus, in applications required to be high in adhesion at the interface between the base and the porous layer, the adhesion may be insufficient. Additionally, the porous layer itself is poorer in strength as compared with any ordinary nonporous resin since the layer has a porous structure.

An object of the present invention is to provide a layered body which has a base and a porous layer on the base, is excellent in pore properties, handleability and formability/workability and is flexible, and which has a formed crosslinked structure, thereby being also excellent not only in the adhesion between the base and the porous layer, and the film strength of the porous layer itself but also in heat resistance, chemical resistances, and endurance; and a process for producing the layered body.

Another object of the present invention is to provide a functional laminate using the layered body with a porous layer; and a process for producing the functional laminate. More specifically, the object is to provide a functional laminate in which the layered body with a porous layer is used to form a functional layer made of a functional material, such as an electroconductive material, over the surface of the porous layer or a polymeric layer originating from the porous layer; and a process for producing the functional laminate.

Means for Solving the Problems

The present invention includes the following aspects.

(1) A layered body, comprising a base, and a porous layer on at least one surface of the base, wherein
the base is a resin film made of at least one resin material selected from the group consisting of polyimide resins, polyamideimide resins, polyamide resins, and polyetherimide resins, or a metal foil piece,
the porous layer is made of a composition containing at least one polymer selected from the group consisting of polyimide resins, polyamideimide resins, polyamide resins, and polyetherimide resins as a main component, and a crosslinking agent, and
the porous layer has fine pores having an average pore diameter of 0.01 to 10 $\mu$m, and a porosity of 30 to 85%.

The polymer(s) constituting the porous layer each have a crosslinkable functional group. The crosslinking agent is an agent capable of crosslinking with the functional group of the polymer(s). For this reason, when a heating treatment and/or an active energy ray radiating treatment are conducted in accordance with the crosslinking agent to cause a reaction of the crosslinking agent, a crosslinked structure is formed in the porous layer.
(2) The layered body according to item (1), wherein the crosslinking agent is at least one selected from the group consisting of compounds each having two or more epoxy groups, polyisocyanate compounds, and silane coupling agents.

(3) The layered body according to item (1) or (2), wherein the porous layer has a thickness of 0.1 to 100 $\mu$m.

(4) The layered body according to any one of items (1) to (3), wherein the porous layer is a layer formed by casting, on the base, a solution of a porous-layer-forming material containing the polymer, which is to constitute the porous layer, and the crosslinking agent into a film form, subsequently immersing this workpiece into a coagulating liquid, and next drying the workpiece.

(5) The layered body according to any one of items (1) to (4), wherein the crosslinking agent comprised in the porous layer is in an unreacted state.

(6) The layered body according to any one of items (1) to (4), wherein the porous layer is a layer having a crosslinked structure formed with the crosslinking agent.

(7) A process for producing the layered body recited in any one of items (1) to (6), comprising:

casting, on the base, a solution of a porous-layer-forming material containing the polymer, which is to constitute the porous layer, and the crosslinking agent into a film form;
subsequently immersing this workpiece into a coagulating liquid; and
next drying the workpiece.

(8) The layered body-producing process according to item (7), wherein after the solution of the porous-layer-forming material is casted into the film form on the base, the resultant workpiece is kept in an atmosphere having a relative humidity of 70 to 100% and a temperature of 15 to 100°C for 0.2 to 15 minutes, and then this workpiece is immersed in the coagulating liquid.

(9) A functional laminate, comprising the layered body recited in any one of items (1) to (4), and comprising, over the surface of the porous layer of the layered body or a polymeric layer originating from the porous layer, a functional layer selected from the group consisting of an electroconductor layer, a dielectric layer, a semiconductor layer, an electric insulator layer, and a resistor layer, wherein
the porous layer or the polymeric layer originating from the porous layer has a crosslinked structure formed with the crosslinking agent.

In this specification, the polymeric layer originating from the porous layer denotes a layer wherein the fine pores in the porous layer are lost by a crosslinking treatment for forming a crosslinked structure (a heating treatment and/or an active energy ray radiating treatment), and/or a treatment for expressing functionality of the functional layer (such as a heating treatment). The polymeric layer originating from the porous layer may be a layer transparentized by the loss of the fine pores.

(10) The functional laminate according to item (9), wherein the functional layer is patterned.

(11) A process for producing a functional laminate comprising the layered body recited in any one of items (1) to (4), and comprising, over the surface of the porous layer of the layered body or a polymeric layer originating from the porous layer, a functional layer selected from the group consisting of an electroconductor layer, a dielectric layer, a semiconductor layer, an electric insulator layer, and a resistor layer, comprising:

forming a layer selected from the group consisting of the electroconductor layer, the dielectric layer, the semiconductor layer, the electric insulator layer and the resistor layer, and a precursor layer thereof over the surface of the porous layer of the layered body recited in any one of items (1) to (4); and
subjecting the resultant workpiece to a heating treatment and/or an active energy ray radiating treatment, thereby forming a crosslinked structure with the crosslinking agent in the porous layer.

(12) The functional laminate according to item (11), wherein the functional layer is patterned.

Effects of the Invention

In the layered body with a porous layer of the present invention, the average pore diameter of the fine pores in the porous layer and the porosity thereof are set in the respective specific ranges so that the porous layer is excellent in flexibility. Furthermore, the porous layer is supported by the base, so that the layer is sufficient in strength and excellent in folding endurance and handleability.

The porous layer is made of a composition containing a polymer having a crosslinkable functional group, the polymer being selected from the group consisting of polyimide resins, polyamideimide resins, polyamide resins, and polyetherimide resins, and a crosslinking agent crosslinkable with the functional group. Thus, when the composition is subjected to crosslinking treatment(s), such as a heating treatment and/or an active energy ray radiating treatment in accordance with the species of the crosslinking agent, a crosslinked structure is formed in the porous layer. The formation of the crosslinked structure yields a layered body wherein the porous layer itself is excellent in film strength, heat resistance, chemical resistances (such as solvent resistance, acid resistance and alkali resistance), and endurance.

The base is a heat-resistant resin film made of resin material(s) selected from the group consisting ofpolyimide resins, polyamideimide resins, polyamide resins, and polyetherimide resins, or is a metal foil piece. Thus, the crosslinking treatment makes an improvement in the adhesion between the substrate and the porous layer. It is assumed that crosslinks are produced at the interface between the substrate and the porous layer. Therefore, a layered body is yielded which is excellent in the adhesion between the substrate and the porous layer, as well as in rigidity, heat resistance, chemical resistances, and endurance.

The layered body with a porous layer of the present invention makes good use of the pore properties of the porous layer, thereby being used as a substrate material in a wide range of fields of a low-permittivity material, a separator, a cushion material, an ink-image receiving sheet, an electrically insulating material, a heat insulating material, and others. Furthermore, when a surface of the porous layer is functionalized, the layered body can widely be used as a substrate for a circuit, a heat radiating material (such as a heat sink or a heat radiating plate), an electromagnetic wave controlling material such as an electromagnetic wave shield or an electromagnetic wave absorbent, an antenna, a cell culture substratum, or some other.

The layered body with a porous layer of the present invention exhibits excellent printability through fine pores in the porous layer, so that a functional material can be finely printed onto the porous layer. Thus, the layered body is useful particularly for a substrate material of the following articles out of the above-mentioned articles: an electromagnetic wave controlling material, a circuit substrate, an antenna, a heat radiating plate, and some other.

The functional laminate of the present invention is a functional laminate comprising the layered body with a porous layer of the present invention, and comprising a functional layer that may be of various types over the surface of the porous layer of the layered body or a polymeric layer originating from the porous layer, wherein the porous layer or the polymeric layer originating from the porous layer has a crosslinked structure formed with the crosslinking agent. The formation of the crosslinked structure yields a functional laminate excellent not only in the adhesion between the substrate and the porous layer or the polymeric layer originating from the porous layer, and the film strength of the porous layer or the polymeric layer itself originating from the porous layer but also in heat resistance, chemical resistances, and endurance.

Brief Description of the Drawings

Fig. 1 is an electron microscopic photograph (power: x 5000) of the surface of a porous layer of a layered body yielded in Example 5.

Fig. 2 is an electron microscopic photograph (power: x 2000) of a cross section of the layered body yielded in Example 5.

Fig. 3 is an electron microscopic photograph (power: x 5000) of the surface of a porous layer of a layered body yielded in Example 16.

Fig. 4 is an electron microscopic photograph (power: x 4000) of a cross section of the layered body yielded in Example 16.

Fig. 5 is an electron microscopic photograph (power: x 5000) of the surface of the porous layer of a product obtained by subjecting the layered body yielded in Example 5 to a heating treatment.

Fig. 6 is an electron microscopic photograph (power: x 2000) of a cross section of the product obtained by subjecting the layered body yielded in Example 5 to the heating treatment.

Fig. 7 is an electron microscopic photograph (power: x 5000) of the surface of the porous layer of a product obtained by subjecting the layered body yielded in Example 16 to a heating treatment.

Fig. 8 is an electron microscopic photograph (power: x 4000) of a cross section of the product obtained by subjecting the layered body yielded in Example 16 to the heating treatment.

Fig. 9 is an electron microscopic photograph (power: x 100) of an electroconductive pattern yielded in Example 18.

Fig. 10 is an electron microscopic photograph (power: x 100) of an electroconductive pattern yielded in Example 19.

Fig. 11 is an electron microscopic photograph (power: x 100) of an electroconductive pattern yielded in Example 20.

Embodiments for Carrying Out the Invention

A description is first made about the layered body with a porous layer of the present invention (the layered body may be referred to as the "porous layer layered body" hereinafter).

The layered body with a porous layer of the present invention is a layered body having a base, and a porous layer on at least one surface of the base, wherein the base is a resin film made of at least one resin material selected from the group consisting of polyimide resins, polyamideimide resins, polyamide resins, and polyetherimide resins, or is a metal foil piece; the porous layer is made of a composition containing at least one polymer selected from the group consisting of polyimide resins, polyamideimide resins, polyamide resins, and polyetherimide resins as a main component, and a crosslinking agent; and the porous layer has fine pores having an average pore diameter of 0.01 to 10 $\mu$m, and a porosity of 30 to 85%.

In the present invention, the large number of fine pores in the porous layer may be independent fine pores, which are low in interconnection, or may be fine pores having interconnection. The average pore diameter of the fine pores in the porous layer is 0.01 to 10 $\mu$m. If the average pore diameter is less than 0.01 $\mu$m, the porous layer is not easily produced by the phase separation technique according to the present invention. If the average pore diameter is more than 10 $\mu$m, it is difficult to control the distribution of the pore diameter in the porous layer evenly.

The feather that the porous layer has the large number of pores can be determined by observation through an electron microscope. In many cases, when the porous layer is observed from the surface thereof, it can be determined whether or not there are spherical empty cells, circular or elliptic pores, fibrous constructions, or some other. When a cross section of the porous layer is observed, it can be checked whether or not there are empty cells each surrounded by a spherical wall, or empty cells surrounded by fibrous constructions. The porous layer may be a porous layer having the surface on which a thin skin layer is formed, or a porous layer in the state that its pores are open.

The porosity (average rate of open area) of the inside of the porous layer is 30 to 85%. If the porosity is out of this range, the porous layer does not easily gain desired pore properties corresponding to the usage thereof. For example, if the porosity is too low, the layered body may be lowered in cushion property or printability. If the porosity is too high, the layered body may be poor in strength or folding endurance.

The porous layer layered body of the present invention has an appropriate interlayer adhesion strength between the base and the porous layer even when the crosslinking agent contained in the porous layer is in an unreacted state. For example, when a tape peeling test based on the following method is made about the porous layer layered body of the present invention, no interfacial peeling is caused between the base and the porous layer: a method of attaching, onto the surface of the porous layer of the layered body, a masking tape "FILM MASKING TAPE No. 603 (#25)" manufactured by Teraoka Seisakusho Co., Ltd., which has a width of 24 mm, over a length of 50 mm from an end of the tape; pressure-bonding the attached tape thereon with a roller (oil-resistant hard rubber roller No. 10, manufactured by Holbein Art Material Inc.), which has a diameter of 30 mm and gives a load of 200 gf; and then pulling the other end of the tape at a peel rate of 50 mm/minute using a tensile tester, thereby peeling the tape into a T-shape. In other words, even when the crosslinking agent contained in the porous layer is in an unreacted state, the base and the porous layer are directly layered on each other with such an interlayer adhesion strength that no interfacial peeling is caused therebetween in the tape peeling test.

As described above, the porous layer layered body of the present invention has a structure wherein the base and the porous layer are layered on each other with the specific interlayer adhesion strength even in the state that the crosslinking agent contained in the porous layer is in an unreacted state. For this reason, the layered body has flexibility, and excellent pore properties while the layered body has appropriate rigidity. Thus, the layered body is improved in handleability. The interlayer adhesion strength between the base and the porous layer may be adjusted by setting appropriately the species of the raw material constituting each of the layers, or physical properties of the interface thereof.

In the present invention, the base is a resin film made of at least one resin material selected from the group consisting of polyimide resins, polyamideimide resins, polyamide resins, and polyetherimide resins, or is a metal foil piece. These are each excellent in heat resistance. The base may be appropriately selected in accordance with the material that constitutes the porous layer, which will be described later.

These resin materials may be used alone or in the form of a mixture of two or more thereof. Copolymers (graft copolymers, block copolymers and random copolymers) of these resins may be used alone or in combination. Furthermore, use may be made of a polymer containing, as a main chain or side chain thereof, a skeleton (polymer chain) of any one of the above-mentioned resins. Specific examples of the polymer include a polysiloxane-containing polyimide containing, in a main chain thereof, skeletons of a polysiloxane and a polyimide.

When a resin film is used as the base, the use of a transparent resin film is preferred in some cases from the viewpoint of the usage which will be described later. In other words, it is preferred to use a transparent resin film base in the case of desiring to convert the porous layer to a transparent polymeric layer by a heating treatment or some other to gain a functional laminate transparent as a whole.

The transparent resin film base may be, besides a completely transparent film base, the so-called semitransparent film base, which permits any object at one side of the base to be perceivable through the base from the side opposite thereto. It is advisable to use, for example, a film base having a total light transmittance of 30 to 100%. A transparent and colored base, such as a polyimide film, absorbs light rays having some wavelengths to be smaller in total light transmittance than completely transparent and colorless bases. Moreover, as the thickness of the base is increased, the total light transmittance becomes small.

The base may be a single layer, or may be a composite film composed of plural layers made of the same raw material, or made of different raw materials, respectively. The composite film may be a layered film in which a plurality of films are layered on each other by optional use of an adhesive or some other, or may be a film yielded through a treatment such as coating, vapor deposition, or sputtering.

When the porous layer is formed on only a single surface of the base, a pressure-sensitive adhesive layer may be formed on the other surface of the base. Furthermore, a protective film (release film) may be bonded onto the pressure-sensitive adhesive layer in order that the base can easily be handled.

The resin base in the present invention is preferably a base about which at the time of painting, onto a surface of the base, a solution of a porous-layer-forming material (painting solution) containing the polymer which is to constitute the porous layer, the resin film does not undergo dissolution, intense deformation or any other change in quality, or slightly undergoes such a change.

The resin base in the present invention may be a commercially available film, for example, "KAPTON" manufactured by Du Pont-Toray Co., Ltd., "APICAL" manufactured by Kaneka Corp., "UPILEX" manufactured by Ube Industries, Ltd., or NEOPULIM manufactured by Mitsubishi Gas Chemical Co., Inc. as a polyimide resin film. Moreover, a product "HDN-20" manufactured by New Japan Chemical Co., Ltd. is published. Besides, the following are introduced in exhibitions or others and can also be used: a product which is a transparent heat-resistant film of a polyamideimide resin and is developed by Toyobo Co., Ltd., a product of a heat-resistant transparent film (F FILM) developed by Gunze Ltd., a product of a transparent and colorless aramid film developed by Toray Industries Inc., and a highly heat-resistant transparent film "SILPLUS" developed by Nippon Steel Chemical Co., Ltd.

The resin base may be subjected to a surface treatment, such as an easy-adhesion treatment, an antistatic treatment, a sandblast treatment (sand matting treatment), a corona discharge treatment, a plasma treatment, a chemical etching treatment, a water matting treatment, a flame treatment, an acid treatment, an alkali treatment, an oxidizing treatment, an ultraviolet radiating treatment, or a silane coupling agent treatment. A commercially available product subjected to such a surface treatment may be used. The base is, for example, a polyimide film subjected to a plasma treatment.

These surface treatments may be used in combination. For example, use may be made of a method of subjecting the base initially to any one of a corona discharge treatment, a plasma treatment, a flame treatment, an acid treatment, an alkali treatment, an oxidizing treatment, and an ultraviolet radiating treatment, and then subjecting the base to a silane coupling agent treatment. Depending on the species of the base, this method may intensify the treatment degree further, as compared with a single treatment with a silane coupling agent. The method can be expected to produce a high effect, in particular, for polyimide bases and other bases. Examples of the silane coupling agent include products manufactured by Shin-Etsu Chemical Co., Ltd., and Japan Energy Corp.

The thickness of the resin base is, for example, 1 to 1000 $\mu$m, usually 1 to 300 $\mu$m, preferably 5 to 200 $\mu$m, more preferably 5 to 100 $\mu$m. If the thickness is too small, the base is not easily handled. On the other hand, if the thickness is too large, the resin base may be declined in flexibility. The above-mentioned commercially available bases, the examples of which have been given, include bases having thicknesses of 12 $\mu$m, 12.5 $\mu$m, 25 $\mu$m, 50 $\mu$m, 75 $\mu$m, and 125 $\mu$m, respectively. Any one of these bases may be used.

The material which constitutes the metal foil piece base is not particularly limited as far as the material does not permit interfacial peeling between the base and the porous layer in the tape peeling test. The material may be appropriately selected in accordance with the material which constitutes the porous layer. Examples of the material constituting the metal foil piece base include copper foil, aluminum foil, iron foil, nickel foil, gold foil, silver foil, tin foil, zinc foil, and stainless steel foil.

The metal foil piece base may be a single layer, or may be a composite metal foil piece composed of plural layers made of the same raw material, or made of different raw materials, respectively. The composite metal foil piece may be a layered film in which a plurality of metal foil pieces are layered on each other by optional use of an adhesive or some other, or may be a film yielded through a treatment such as coating, vapor deposition, or sputtering. When the porous layer is formed on only a single surface of the metal foil piece base, a pressure-sensitive adhesive layer may be formed on the other surface of the base. Furthermore, a protective film (release film) may be bonded onto the pressure-sensitive adhesive layer in order that the base can easily be handled.

The metal foil piece base in the present invention is preferably a base about which at the time of painting a polymer solution (painting solution) that is used to form the porous layer, the film does not undergo dissolution, intense deformation or any other change in quality, or slightly undergoes such a change.

The metal foil piece base in the present invention may be a commercially available metal foil piece in a film form, examples thereof being described below.

As a copper foil piece, the following are on the market: electrolytic copper foil pieces (article species: HTE, VP, HS, and SV) manufactured by Fukuda Metal Foil & Powder Co., Ltd., rolled copper foil pieces (article species: RCF and RCF-AN) manufactured by the same, electrolytic copper foil pieces (article species: HTE and VLP) manufactured by Mitsui Mining & Smelting Co., Ltd., and a rolled copper foil piece manufactured by Nippon Foil Mfg. Co., Ltd.

As an aluminum foil piece, the following are on the market: foil pieces manufactured by Fukuda Metal Foil & Powder Co., Ltd., Nippon Foil Mfg. Co., Ltd., and Sumikei Aluminum Foil Co., Ltd., respectively.

As an iron foil piece, a piece manufactured by Toho Zinc Co., Ltd. is on the market.

Use may be made of a product wherein a pressure-sensitive adhesive is painted on a single surface of a metal foil piece. Examples of a commercially available product having this structure include a copper foil pressure-sensitive adhesive tape, an aluminum foil pressure-sensitive adhesive tape, a stainless steel foil pressure-sensitive adhesive tape, an electroconductive copper foil pressure-sensitive adhesive tape, an electroconductive aluminum foil pressure-sensitive adhesive tape, and a shield pressure-sensitive adhesive tape (electroconductive cloth pressure-sensitive adhesive tape) each manufactured by Teraoka Seisakusho Co., Ltd. A stainless steel tape and other commercially available products manufactured by Nitoms Inc. may also be used.

The metal foil piece base may be subjected to a surface treatment, such as a roughening treatment, an easy-adhesion treatment, an antistatic treatment, a sandblast treatment (sand matting treatment), a corona discharge treatment, a plasma treatment, a chemical etching treatment, a water matting treatment, a flame treatment, an acid treatment, an alkali treatment, or an oxidizing treatment. A commercially available product subjected to such a surface treatment may be used. The metal foil piece base is, for example, a copper foil piece subjected to a roughening treatment.

The thickness of the metal foil piece base is, for example, 1 to 1000 $\mu$m, usually 1 to 300 $\mu$m, preferably 5 to 200 $\mu$m, more preferably 5 to 100 $\mu$m. If the thickness is too small, the base is not easily handled. On the other hand, if the thickness is too large, the metal foil piece base may be declined in flexibility. The above-mentioned commercially available bases, the examples of which have been given, include bases having thicknesses of 9 $\mu$m, 12 $\mu$m, 18 $\mu$m, 35 $\mu$m, and 70 $\mu$m, respectively. Any one of these bases may be used.

The resin film base and the metal foil piece base may each be a base in which a through hole is made. The wording "base in which a through hole is made" herein means a base having an open hole penetrating the base in a direction substantially perpendicular to planes of the base. The base that is a base having many through holes is not particularly limited as far as the base is one wherein a large number of through holes are made and no interfacial peeling is caused between the base and the porous layer in the above-mentioned tape peeling test. Examples thereof include a punched film; and metal foil pieces or sheets, such as a punched metal, an expanded metal, and an etched metal. An appropriate base is selected in accordance with properties such as water resistance, heat resistance, and chemical resistances.

The punched film may be a film wherein holes having a shape such as a circle, square, rectangle, or ellipse are made in a film made of a polyimide or some other by subjecting this original film to punching or some other working.

The punched metal may be a metal wherein holes having a shape such as a circle, square, rectangle, or ellipse are made in a metal foil piece or sheet by subjecting this piece or sheet to punching or some other working. Examples of the material thereof include iron, aluminum, stainless steel, copper, and titanium.

The expanded metal may be a metal having a shape according to the JIS standard. Examples thereof include XS63 and XS42 flat metals. Examples of the material thereof include iron, aluminum, and stainless steel.

The base having many through holes may be produced by any usual method, for example, a working method such as etching, punching or laser radiation in accordance with the material. The base having many through holes has the following advantage: when a polymer solution (a solution of a porous-layer-forming material) is painted onto a surface thereof to laminate a porous layer thereon, the polymer solution advances also into the through holes; thus, they can be layered on each other with an excellent interlayer adhesion strength. Moreover, the base has flexibility and excellent pore properties while the base has appropriate rigidity. Thus, the base can gain an effect of an improvement in handleability.

When the base is a punched film or punched metal, the rate of open area in the surface thereof is about 20 to 80%, preferably about 30 to 70%. If the numerical value of the rate of open area in the surface is too low, the base is unfavorably liable to become poor in permeability to gas or liquid. If the numerical value is too high, the base unfavorably tends to be declined in strength to be poor in handleability.

When the base is an expended metal, the rate of open area in the surface thereof is about 20 to 80%, preferably about 25 to 70%. If the numerical value of the rate of open area in the surface is too low, the base is unfavorably liable to become poor in permeability to gas or liquid. If the numerical value is too high, the base unfavorably tends to be easily declined in strength to be poor in handleability.

In the present invention, the porous layer is made of a composition containing at least one polymer having a crosslinkable functional group and selected from the group consisting of polyimide resins, polyamideimide resins, polyamide resins, and polyetherimide resins as a main component, and further containing a crosslinking agent crosslinkable with the functional group. These polymer components are excellent in heat resistance, thermally shapeable, and excellent in mechanical strength, chemical resistances, and electric properties.

Examples of the crosslinkable functional group contained in the polymer(s) include amide, carbonyl, amino, isocyanate, hydroxyl, epoxy, aldehyde, and acid anhydride groups. The number of the species of these functional groups contained in the polymer(s) is not limited.

Usually, the polyamideimide resins may each be produced by conducting polymerization through a reaction between trimellitic anhydride and a diisocyanate, or a reaction between anhydrous trimellitic chloride and a diamine, and then imidizing the resultant polymer. Since the polyamideimide resin has many amide groups in the molecule, these groups can each be preferably used as the crosslinkable functional group. There exists a polyamideimide resin about which imides are partially in the state of an unreacted precursor (an amic acid) so that the reactivity of the resin remains. An amide group or carboxyl group that constitutes this amic acid may be used as the crosslinkable functional group. As described above, the polyamideimide resin may be produced by conducting polymerization through a reaction between trimellitic anhydride and a diisocyanate, or a reaction between anhydrous trimellitic chloride and a diamine; thus, in many cases, at a terminal of the polyamideimide, a carboxyl group, an isocyanate group, an amino group or some other remains. This group may be used as the crosslinkable functional group.

The polyimide resins may each be produced, for example, by causing a tetracarboxylic acid component to react with a diamine component to yield a polyamic acid (polyimide precursor), and further imidizing the acid. When the porous layer is made of the polyimide resin, the imidization of the starting compound makes the solubility of the resultant compound poor. It is therefore advisable that a porous film is initially formed at the stage of the polyamic acid and then the film is imidized (for example, thermally imidized or chemically imidized). The precursor has, in any molecule thereof, many carboxyl groups or amide groups; thus, the groups can each be preferably used as the crosslinkable functional group. In the same manner as in the case of the polyamideimide resin, in many cases, at a terminal of the polyimide, a carboxyl group, an amino group or some other remains. This group may also be used as the crosslinkable functional group.

The polyamide resins can each be produced by polycondensation between a diamine and a dicarboxylic acid, ring-opening polymerization of a lactam, polycondensation of an aminocarboxylic acid, or some other. The polyamide resin may be an aromatic polyamide resin. The resin has, in any molecule thereof, many amide groups; thus, the groups may each be used as the crosslinkable functional group. In the same manner as in the case of the polyamideimide resin, in many cases, at a terminal of the polyamide, a carboxyl group, an amino group or some other remains. This group may be used as the crosslinkable functional group.

The polyetherimide resins can each be produced, for example, by causing an aromatic tetracarboxylic acid component having an ether bond to react with a diamine component to yield a polyamic acid, and further imidizing the acid. Any amide group or carboxyl group that constitutes this amic acid can be used as the crosslinkable functional group. In the same manner as in the case of the polyamideimide resin, in many cases, at a terminal of the polyetherimide resin, a carboxyl group, an isocyanate group, an amino group or some other remains. This group may also be used as the crosslinkable functional group.

As described above, the crosslinkable functional group may be present in the precursor of the above-mentioned polymer(s). Any imide resin (a polyimide resin, a polyamideimide resin, or a polyetherimide resin) can be produced in the state of a precursor (amic acid) wherein its imide group moieties are wholly unreacted, or in the state of a precursor (amic acid) wherein its imide group moieties are partially unreacted. Actually, some imide resins are sold in such a form. In general, an amic acid is heated to be converted to an imide, and the resultant imide is used as an imide resin. In the present invention, any amide group or carboxyl group that constitutes this precursor amic acid may be used as the crosslinkable functional group.

Moreover, by modifying a polyimide resin, a polyamideimide resin, a polyamide resin or a polyetherimide resin, the crosslinkable functional group may be introduced into the resin.

The crosslinkable functional group may be present in the main chain of the resin(s), or may be present in a side chain thereof. The crosslinkable functional group may be present in the middle of the molecular chain thereof, or at a terminal thereof. The crosslinkable functional group may be present in a benzene ring contained in the polymer(s).

The above-mentioned polymer components may be used alone or in combination of two or more thereof. Copolymers (graft copolymers, block copolymers or random copolymers) of the above-mentioned resins may be used alone or in combination. Furthermore, use may be made of a polymer containing, in its main chain or side chain, a skeleton (polymer chain) of any one of these resins. Specific examples of such a polymer include a polysiloxane-containing polyimide that contains, in the main chain thereof, skeletons of a polysiloxane and a polyimide. Any amide group or carboxyl group that constitutes an amic acid of a polyimide precursor thereof may be used as the crosslinkable functional group.

In the present invention, besides the polyimide resins, the polyamideimide resins, the polyamide resins, and the polyetherimide resins, a different resin may be together used in a small amount as far as properties of these amide or imide resins are not damaged. Examples of the different resin include polyethersulfone resins, polycarbonate resins, polyphenylenesulfide resins, polyester resins, liquid crystalline polyester resins, polybenzoxazole resins, polybenzoimidazole resins, polybenzothiazole resins, polysulfone resins, cellulose resins, and acrylic resins.

The crosslinking agent is an agent that can react with the crosslinkable functional group which the polymer(s) have so as to crosslink therewith. Examples of the crosslinking agent include any compound having two or more epoxy groups, polyisocyanate compounds, and silane coupling agents.

The compound having two or more epoxy groups can react with the crosslinkable functional group (an amide, carboxyl, amino, isocyanate, hydroxyl, epoxy, aldehyde, or acid anhydride group) which the polymer(s) have. The compound having two or more epoxy groups is generally called an epoxy resin in many cases.

The epoxy resin can be classified into various resins, example of which include glycidyl ether epoxy resins, for example, bisphenol resins, such as bisphenol A type and bisphenol F type resins, and novolak resins, such as phenol novolak type and cresol novolak type resins; alicyclic epoxy resins; and modified resins of these resins. Examples of a usable commercially available product of the epoxy resin include "ARALDITE" manufactured by Huntsman Advanced Materials, "DENACOL" manufactured by Nagase ChemteX Corp., "CELLOXIDE" manufactured by Daicel Chemical Industries, Ltd., "EPOTOHTO" manufactured by Tohto Kasei Co., Ltd., and "jER" manufactured by Japan Epoxy Resins Co., Ltd.

The above-mentioned polyisocyanate compounds can each react with the crosslinkable functional group (a carboxyl, amino, hydroxyl, epoxy or acid anhydride group) which the polymer(s) have. Examples of the polyisocyanate compound include aromatic polyisocyanate compounds such as tolylene diisocyanate (TDI), 4,4'-diphenylmethane diisocyanate (MDI), phenylene diisocyanate, diphenyl diisocyanate, and naphthalene diisocyanate; aliphatic polyisocyanate compounds such as hexamethylene diisocyanate (HDI), and lysine diisocyanate; and alicyclic polyisocyanate compounds such as isophorone diisocyanate (IPDI), cyclohexane-1,4-diisocyanate, and hydrogenated MDI. Examples of a commercially available product of the polyisocyanate compound include "TAKENATE" manufactured by Mitsui Chemicals Polyurethanes, Inc., and "COLONATE" manufactured by Nippon Polyurethane Industry Co., Ltd.

The above-mentioned silane coupling agents can each react with the crosslinkable functional group (an amide, carboxyl, amino, isocyanate, hydroxyl, epoxy, aldehyde, or acid anhydride group) which the polymer(s) have. Examples of the silane coupling agent include N-2(aminoethyl)3-aminopropylmethyldimethoxysilane and 3-glycidoxypropyltriethoxysilane. Silane coupling agents manufactured by Shin-Etsu Chemical Co., Ltd. may be used. In the case of using a metal foil piece base, the silane coupling agent is effective for improving the adhesion between the porous layer and the metal foil piece base. Also in the case of using a surface-treated resin film base, the silane coupling agent is effective for improving the adhesion between the porous layer and the resin film base.

Examples other than the above-mentioned examples of the crosslinking agent include a melamine resin, a phenol resin, a urea resin, a guanamine resin, an alkyd resin, a dialdehyde compound, and an acid anhydride.

The melamine resin can react with the crosslinkable functional group (an amino, hydroxyl, or aldehyde group) which the polymer(s) have. Examples of the melamine resin include "YUBAN 20SB" manufactured by Mitsui Chemicals, Inc., and "SUPER BACKAMINE" manufactured by DIC Corp.

The phenol resin can react with the crosslinkable functional group (a carboxyl, amino, hydroxyl, epoxy, isocyanate, aldehyde or acid anhydride group) which the polymer(s) have. Examples of the phenol resin include "SUMILITERESIN" manufactured by Sumitomo Bakelite Co., Ltd.

The urea resin can react with the crosslinkable functional group (an amino, hydroxyl, or aldehyde group) which the polymer(s) have. Examples of the urea resin include "UBAN 10S60" manufactured by Mitsui Chemicals, Inc.

The guanamine resin can react with the crosslinkable functional group (an aldehyde group) which the polymer(s) have. Examples of the guanamine resin include "NIKALAC BL-60" manufactured by Sanwa Chemical Co., Ltd.

The alkyd resin can react with the crosslinkable functional group (a carboxyl, hydroxyl, epoxy, isocyanate, or acid anhydride group) which the polymer(s) have. Examples of the alkyd resin include "BECKOSOL" manufactured by DIC Corp.

The dialdehyde compound can react with the crosslinkable functional group (an amino or hydroxyl group) which the polymer(s) have. Examples of the dialdehyde compound include glyoxal.

The acid anhydride can react with the crosslinkable functional group (an amino, epoxy or isocyanate group) which the polymer(s) have. Examples of the acid anhydride include tetrahydrophthalic anhydride (THPA), hexahydrophthalic anhydride (HHPA), methyltetrahydrophthalic anhydride (Me-THPA), methylhexahydrophthalic anhydride (Me-HHPA), methyl nadic anhydride (NMA), hydrogenated methyl nadic anhydride (H-NMA), trialkyltetrahydrophthalic anhydride (TATHPA), methylcyclohexenetetracarboxylic dianhydride (MCTC), phthalic anhydride (PA), trimellitic anhydride (TMA), pyromellitic anhydride (PMDA), benzophenonetetracarboxylic dianhydride (BTDA), ethylene glycol bisanhydrotrimellitate (TMEG), glycerin bis(anhydrotrimellitate) monoacetate (TMTA), dodecenylsuccinic anhydride (DDSA), aliphatic dibasic acid polyanhyride, and chlorendic anhydride.

In the present invention, it is advisable to select the crosslinking agent in accordance with the species of the used polymer(s), considering the reactivity thereof. About the crosslinking agent, a single species thereof or a combination of two or more species thereof may be used.

The method for causing the crosslinkable functional group in the polymer(s) to react with the crosslinking agent may be a physical treatment with heat, or the radiation of active energy rays (visible rays, ultraviolet rays, an electron beam, or radioactive rays). A heat treatment is preferably used since the treatment is simple and easy. The radiation of active energy rays such as ultraviolet rays, an electron beam, or radioactive rays is also preferably used since the radiation can give a large energy in a short period to promote the reaction. Although the reaction of the crosslinking agent may be advanced in the absence of any catalyst, the reaction may be promoted by the addition of a catalyst.

In the composition constituting the porous layer, the blend ratio between the polymer(s) having the crosslinkable functional group and the crosslinking agent crosslinkable with the functional group is not particularly limited, and may be appropriately decided, considering a desired degree of crosslinking, the species of the polymer(s) and the crosslinking agent, the reactivity between the functional group and the crosslinking agent, the adhesion between the porous layer and the base, and others. For example, it is advisable to set the amount of the crosslinking agent 2 to 312.5 parts by weight for 100 parts by weight of the polymer(s). If the amount of the crosslinking agent is less than 2 parts by weight for 100 parts by weight of the polymer(s), the degree of crosslinking would be small. If the amount of the crosslinking agent is more than 312.5 parts by weight for 100 parts by weight of the polymer(s), the crosslinking agent becomes excessive in amount so that a portion of the crosslinking agent that does not contribute to the crosslinking reaction may remain in the porous layer after the layer is subjected to a crosslinking treatment. In connection with the lower limit amount of the crosslinking agent, the amount of the crosslinking agent is preferably 10 parts by weight or more, more preferably 20 parts by weight or more for 100 parts by weight of the polymer(s). In connection with the upper limit amount of the crosslinking agent, the amount of the crosslinking agent is preferably 200 parts by weight or less, more preferably 150 parts by weight or less for 100 parts by weight of the polymer(s).

The thickness of the porous layer is, for example, 0.1 to 100 $\mu$m, preferably 0.5 to 70 $\mu$m, more preferably 1 to 50 $\mu$m. If the thickness is too small, the porous layer is not stably produced with ease. Moreover, the layered body may be declined in cushion performance, or printability. On the other hand, if the thickness is too large, the pore diameter distribution is not evenly controlled with ease.

In the porous layer layered body of the present invention, the base and the porous layer are directly layered onto each other, without interposing any other layer therebetween, with such an interlayer adhesion strength that no interfacial peeling is caused in the tape peeling test even when the crosslinking agent contained in the porous layer is in an unreacted state. In the process for producing the porous layer layered body, or in the state that the crosslinking agent is unreacted, examples of means for improving the adhesion between the base and the porous layer include a method of subjecting a surface of the base on which the porous layer is to be layered to an appropriate surface treatment, such as a sandblast treatment (sand matting treatment), a corona discharge treatment, an acid treatment, an alkali treatment, an oxidizing treatment, an ultraviolet radiating treatment, a plasma treatment, a chemical etching treatment, a water matting treatment, a flame treatment, or a silane coupling agent treatment; and a method of using, as components constituting the base and the porous layer, a combination of raw materials that are able to exhibit good adhesion (affinity or compatibility). The silane coupling agent may be any one of the above-mentioned examples thereof. These surface treatments may be applied in combination of two or more thereof. Depending on the base, it is preferred to apply a combination of a silane coupling agent treatment with some other treatment.

From the viewpoint of the adhesion between the base and the porous layer, it is preferred that the components constituting the base are partially or wholly identical with those constituting the porous layer. A structure therefor is, for example, a structure wherein monomer units of the respective polymeric compounds constituting the base and the porous layer are at least partially common to each other. Examples of the structure include a layered body wherein materials constituting the base and the porous layer are any one of the following combinations: polyimide/polyimide, polyamideimide/polyimide, polyimide/polyamideimide, polyetherimide/polyimide, polyimide/polyetherimide, polyamideimide/polyetherimide, polyetherimide/polyamideimide, polyamide/polyimide, polyamideimide/polyamide, and polyimide/polyamide.

The porous layer in the present invention has many fine pores, and the average pore diameter of the fine pores (the average pore diameter of the fine pores in the porous layer) is 0.01 to 10 $\mu$m, preferably 0.05 to 5 $\mu$m. If the average pore diameter is out of this range, the porous layer is poor in pore properties since the layer does not easily produce a desired effect in accordance with the usage. If the average pore diameter is smaller than 0.01 $\mu$m, the layered body may be declined in cushion performance or heat insulating performance and further the porous layer is not easily produced according to the phase separation technique in the present invention. On the other hand, if the average pore diameter is more than 10 $\mu$m, the pore diameter distribution in the porous layer is not evenly controlled with ease. Thus, the relative permittivity of the porous layer may become uneven between individual regions thereof.

The average rate of open area (porosity) of the inside of the porous layer is, for example, 30 to 85%, preferably 35 to 85%, more preferably 40 to 85%. If the porosity is out of this range, the porous layer does not easily gain desired pore properties corresponding to the usage. If the porosity is, for example, too low, the layered body may be raised in permittivity, or be lowered in cushion performance, heat insulating performance or printability. If the porosity is too high, the layered body may be poor in strength or folding endurance.

The rate of open area in the surface (rate of surface open area) of the porous layer is, for example, 90% or less (for example, 0 to 90%), preferably about 0 to 80%. If the rate of surface open area is too high, the layered body may be unfavorably declined in mechanical strength or folding endurance with ease. Depending on the usage, there is generated a case where it is preferred that the rate of surface open area of the porous layer is high, or a case where it is preferred that the rate of surface open area is low.

For example, when the porous layer is bonded to a copper foil piece to produce a copper clad layered plate, the base of which is low in relative permittivity, an adhesive therefor penetrates through the inside at the time of the bonding onto the copper foil piece, so that the adhesive may unfavorably make the layered plate low in relative permittivity. When the layered plate is further etched to form a circuit, an etchant therefor penetrates into the porous layer so that the porous layer may be unfavorably etched from the inside. Thus, it is preferred that the rate of surface open area is low.

For example, when the surface of the porous layer is plated or printed, an appropriate open area is preferred for causing the layer to exhibit an anchor effect to keep, with certainty, the adhesion between the surface and the plating or the ink. Moreover, an appropriate open area may be preferred for washing sufficiently a water-soluble polar solvent or water-soluble polymer used in the formation of the porous layer.

The porous layer needs only to be formed on at least one surface of the base. The porous layer may be formed on each of both surfaces thereof. According to the formation of the porous layer onto each of the base surfaces, good use is made of the pore properties thereof to yield a porous layer layered body which has, in each of both surfaces thereof, a low-permittivity property, cushion property, heat insulating performance, good printability, and others. When the surface of the porous layer is further functionalized, the resultant may be used as a substrate material in a wide range of fields of a substrate for a circuit, a heat radiating material (a heat sink or a radiating plate), an electromagnetic wave controlling material such as an electromagnetic wave shield or an electromagnetic wave absorbent, a low-permittivity material, an antenna, a separator, a cushion material, an ink-image receiving sheet, an electrically insulating material, a heat insulating material, a cell culture substratum, an electrolytic membrane base, and others.

The porous layer layered body of the present invention can be produced by, for example,

a process of casting, on a base as described above, a solution of a porous-layer-forming material containing a polymer which is to constitute a porous layer as described above, and a crosslinking agent into a film form; bringing this workpiece into contact with a coagulating liquid, thereby subjecting the workpiece to a porousness-imparting treatment; and then drying the workpiece as it is, thereby yielding the layered body, which is composed of the base and the porous layer; or

a process of casting, on a support, a solution of a porous-layer-forming material containing a polymer which is to constitute a porous layer as described above into a film form; bringing this workpiece into contact with a coagulating liquid, thereby subjecting the workpiece to a porousness-imparting treatment; transferring the resultant porous layer from the support to a surface of a base; and subsequently drying the resultant workpiece, thereby yielding the layered body, which is composed of the base and the porous layer. In the present invention, the former process is preferably used, as will be described below.

The process of the present invention for producing a porous layer layered body is characterized by casting, on a base as described above, a solution of a porous-layer-forming material containing a polymer which is to constitute a porous layer as described above, and a crosslinking agent into a film form; subsequently introducing this workpiece into a coagulating liquid; and next drying the workpiece, thereby laminating the porous layer onto at least one surface of the base to yield the porous layer layered body. According to this process, a wet phase transition technique is used to form the porous layer onto the base, and then the workpiece is dried as it is. For this reason, at the same time when the porous layer is formed, the porous layer can be layered and adhered closely onto the base surface. Thus, the efficiency of the production can be improved. A porous layer having many fine pores is flexible so that the porous layer alone is not easily handled; thus, the step of laminating the layer is difficult. However, the production process of the present invention, wherein the film is layered at the same time when the film is formed, makes it possible to avoid such a problem and yield, with ease, a porous layer layered body wherein a base and a porous layer having excellent pore properties are directly layered onto each other.

The solution of the porous-layer-forming material, which may be referred to as the porous-layer-forming solution hereinafter, contains, for example, polymer component(s) that are to be a main material which constitutes the porous layer, a crosslinking agent, and a water-soluble polar solvent, and optionally contains a water-soluble polymer and water.

In the porous-layer-forming solution, instead of the polymer component(s), which are to constitute the porous layer, the following may be used: a monomer component (raw material) of the polymer component(s), an oligomer thereof, a precursor thereof that has not been yet imidized or cyclized, or some other.

The temperature of the coagulating liquid is not particularly limited, and is, for example, 0 to 100°C. If the temperature of the coagulating liquid is lower than 0°C, the washing effect of the solvent or some other is easily declined. If the temperature of the coagulating liquid is higher than 100°C, the solvent or the coagulating liquid vaporizes so that the working environment is damaged. The coagulating liquid is preferably water from the viewpoint of costs, safety, toxicity and others. When the coagulating liquid is water, the temperature of water is appropriately about 5 to 60°C. The period of immersion of the workpiece in the coagulating liquid is not particularly limited, and it is advisable to select appropriately a period over which the solvent and the water-soluble polymer are sufficiently washed. If the washing period is too short, the porous structure may be broken with a remaining portion of the solvent in the drying step. If the washing period is too long, the production efficiency is declined so that production costs increase. The washing period cannot be specified without reservation since the period depends on the thickness of the porous layer, and others, and may be set into the range of about 0.5 to 30 minutes.

It is preferred to cast the porous-layer-forming solution into a film form onto a base, keep the workpiece in an atmosphere having a relative humidity of 70 to 100% and a temperature of 15 to 100°C for 0.2 to 15 minutes, and subsequently immerse this workpiece into the coagulating liquid.

The addition of the water-soluble polymer or water to the porous-layer-forming solution is effective for making the film structure into a sponge form, thereby making it porous. Examples of the water-soluble polymer include polyethylene glycol, polyvinyl pyrrolidone, polyethylene oxide, polyvinyl alcohol, polyacrylic acid, any polysaccharide, and derivatives thereof; and mixtures thereof. Of these examples, polyvinyl pyrrolidone is preferred since the polymer restrains the formation of fine pores inside the porous layer and makes an improvement in the mechanical strength of the porous layer. These water-soluble polymers may be used alone or in combination of two or more thereof. The weight-average molecular weight of the water-soluble polymer is appropriately 200 or more, preferably 300 or more, in particular preferably 400 or more (for example, about 400 to 200000), and may be 1000 or more for making the workpiece porous. The addition of water makes it possible to adjust the pore diameter. For example, when the addition amount of water into the porous-layer-forming solution is increased, the pore diameter can be made large.

The water-soluble polymer is very effective for rendering the film structure a homogenous sponge-like porous structure. Various structures can be yielded by varying the species and the amount of the water-soluble polymer. Thus, the water-soluble polymer is very suitable for giving desired pore properties to the porous layer as an additive used when the layer is formed.

However, the water-soluble polymer is an unnecessary component to be removed, which does not constitute the porous layer finally. In the process of the present invention using a wet phase transition technique, the water-soluble polymer is washed to be removed in the step in which the water-soluble polymer is immersed in the coagulating liquid such as water to undergo phase transition. On the other hand, in a dry phase transition technique, a component which does not constitute any porous layer (unnecessary component) is heated to be removed, and a water-soluble polymer is usually unsuitable for being heated and removed; thus, it is very difficult to use the polymer as an additive in the technique. As described herein, it is difficult to form various void structures by a dry phase transition technique while the production process of the present invention is advantageous since a porous layer layered body having desired pore properties can easily be produced.

However, when the amount of the water-soluble polymer is increased, the interconnection of the pores tends to be heightened. Thus, when the interconnection is desired to be low, it is preferred to set the amount of the water-soluble polymer into a minimum amount. When the interconnection is heightened, the porous layer tends to be lowered in strength. Thus, it is not preferred to add the water-soluble polymer excessively. Furthermore, the excessive addition is not preferred since the addition produces a necessity of making the period for the washing long. It is allowable not to use any water-soluble polymer.

Examples of the water-soluble polar solvent include dimethylsulfoxide, N,N-dimethylformamide, N,N-dimethylacetamide (DMAc), N-methyl-2-pyrrolidone (NMP), 2-pyrrolidone, and γ-butyrolactone; and mixtures thereof. Use may be made of a solvent having solubility in accordance with the chemical skeleton of resin(s) used as the polymer component (s) (i.e., a good solvent for the polymer component(s)).

The blend amount of each of the components in the porous-layer-forming solution is preferably as follows: the blend amount of the polymer component(s) is 8 to 25% by weight of the porous-layer-forming solution; that of the crosslinking agent 0.5 to 25% by weight thereof; that of the water-soluble polymer 0 to 50% by weight thereof; that of water 0 to 10% by weight thereof; and that of the water-soluble polar solvent 30 to 82% by weight thereof. If the concentration of the polymer component(s) is too low at this time, the porous layer becomes insufficient in thickness or does not easily gain desired pore properties. On the other hand, if the concentration of the polymer component(s) is too high, the porosity tends to be small. If the concentration of the crosslinking agent is too low, the porous layer does not easily gain a sufficient effect of making an improvement in chemical resistances or in adhesion to the base. On the other hand, if the concentration of the crosslinking agent is too high, the resultant porous layer is liable to have a sticky surface, and after the crosslinking thereof an excessive portion of the crosslinking agent may remain. If the concentration of the water-soluble polymer is too high, the solubility of the individual components in the porous-layer-forming solution deteriorates, the porous layer is declined in strength, and other inconveniences are easily caused. The addition amount of water may be used for the adjustment of the pore diameter. When the addition amount is increased, the pore diameter can be made large.

It is desired to cast the porous-layer-forming solution into a film form onto a base, keep the resultant film in an atmosphere having a relative humidity of 70 to 100% and a temperature of 15 to 100°C for 0.2 to 15 minutes, and subsequently introduce the workpiece into a coagulating liquid made of a nonsolvent for the polymer component(s). When the cast film-form product is put under the humidifying condition, a porous layer high in homogeneity is easily obtained. It appears that when the product is put under the humidifying condition, water invades the inside of the film from the surface thereof to promote the phase separation of the polymer solution efficiently. The condition is preferably a condition that the relative humidity is 90 to 100% and the temperature is 30 to 80°C, more preferably a condition that the relative humidity is about 100% (for example, 95 to 100%) and the temperature is 40 to 70°C. If the water content in the air is smaller than this humidity, the porosity may become insufficient.

The above-mentioned process makes it possible to form, with ease, for example, a porous layer having many fine pores having an average pore diameter of 0.01 to 10 μm. As described above, about the porous layer constituting the porous layer layered body in the present invention, the diameter of the fine pores, the porosity, and the rate of open area can each be adjusted into a desired value by selecting appropriately the respective species or amounts of the constituting components of the polymer solution, the use amount of water, the humidity and the temperature in the casting, the period for the casting, and others.

The coagulating liquid used in the phase transition technique needs only to be a solvent for coagulating the polymer component(s), and is appropriately selected in accordance with the species of the polymer(s) used as the polymer component(s). The liquid may be, for example, a solvent for coagulating a polyamideimide resin, a polyamic acid, or some other. The liquid may be, for example, a water-soluble coagulating liquid, examples of which include water; alcohols such as a monohydric alcohol such as methanol or ethanol, or a polyhydric alcohol such as glycerin; water-soluble polymers such as polyethylene glycol, and mixtures thereof.

In the production process of the present invention, after the introduction of the workpiece into the coagulating liquid to form the porous layer onto the base surface, the resultant is dried as it is, thereby producing a layered body having a structure wherein the porous layer is directly layered on the surface of the base. The drying is not particularly limited as far as the drying is according to a method capable of removing the solvent component(s) in the coagulating liquid and the others. The drying may be drying by heating or natural drying at room temperature. The drying treatment at this time is conducted at a temperature lower than the glass transition temperature (Tg) of the composition constituting the porous layer. In the drying treatment, attention should be paid not to cause a phenomenon that the composition constituting the porous layer is softened so that the fine pores disappear. If the fine pores disappear, the upper of the porous layer is deteriorated in printability.

The method for the drying treatment is not particularly limited, and may be a hot wind treatment, a thermal roll treatment, or a method of putting the workpiece into a thermostat, an oven or the like. The method needs only to control the layered body into a predetermined temperature. The atmosphere in the drying treatment may be the air, nitrogen, or an inert gas. The use of the air is most inexpensive; however, the use may involve an oxidizing reaction. When this should be avoided, it is preferred to use nitrogen or an inert gas. Nitrogen is suitable from the viewpoint of costs. Conditions for the heating are appropriately set considering the productivity, physical properties of the porous layer and the base, and others. When the workpiece is dried, a layered body can be yielded wherein the porous layer is directly shaped on the base surface.

The resultant porous layer layered body is subjected to a crosslinking treatment. In the porous layer layered body yielded as described above, the crosslinking agent contained in the porous layer is usually in an unreacted state. However, when the crosslinking agent is an agent causing thermal crosslinkage, a crosslinked structure may be formed by a partial or entire reaction of the crosslinking agent depending on the drying treatment condition.

The crosslinking treatment may be a heating treatment, and/or an active energy ray (visible rays, ultraviolet rays, an electron beam, radioactive rays or some other) radiating treatment. It is advisable to set appropriate conditions for each of these treatments. For example, in the heating treatment, it is advisable to set the following conditions: a temperature of 100 to 400°C, and a period of 10 seconds to 5 hours.

When the crosslinking treatment is conducted, the crosslinkable functional group of the polymer(s) reacts with the functional group of the crosslinking agent to form a crosslinked structure in the porous layer. By the formation of the crosslinked structure, a layered body is yielded which is very good in the film strength of the porous layer itself as well as in heat resistance, chemical resistances, and endurance. It appears that crosslinks are formed also in the interface between the substrate and the porous layer to improve the adhesion between the substrate and the porous layer. A layered body is yielded which is far better in the adhesion between the substrate and the porous layer, as well as in rigidity.

When a functional layer is further laid onto the surface of the porous layer (functionalizing treatment) to yield a functional laminate of the present invention, there are several timings for conducting the crosslinking treatment, as described below.

(a) A method of subjecting the resultant porous layer layered body to the crosslinking treatment, and subsequently laying the functional layer onto the porous layer surface to yield the functional laminate.
(b) A method of laying the functional layer onto the porous layer surface of the resultant porous layer layered body, and subsequently subjecting the workpiece to the crosslinking treatment. The crosslinking treatment that is a crosslinking treatment by heating may also attain a heating treatment for expressing the function of the functional layer.
(c) A method of subj ecting the resultant porous layer layered body to a partial-crosslinking treatment, subsequently laying the functional layer onto the porous layer surface, and further subjecting the workpiece again to a crosslinking treatment to attain a complete crosslinking treatment, thereby yielding the functional laminate. The partial crosslinking treatment referred to herein intends the porous layer to be turned into a semi-cured state (the so-called B stage).

The production process of the present invention makes it possible to yield easily a layered body including a base, and a porous layer which is laid on a single surface of the base, or each of both surfaces thereof and which is made of a composition containing polymer(s) and a crosslinking agent wherein the porous layer has fine pores having an average pore diameter of 0.01 to 10 $\mu$m, and has a porosity of 30 to 85%.

If necessary, the porous layer layered body of the present invention may be subjected to a heat treatment or a coat-forming treatment to give a desired property thereto.

The porous layer layered body of the present invention has the formed crosslinked structure, thereby being very good in chemical resistances. The porous layer may be further subjected to a chemical-resistance-imparting treatment. In various use forms of the porous layer layered body, the impartation of the chemical resistances to the porous layer makes it possible that the layered body advantageously avoids interlayer peeling, swelling, dissolution, denaturation, and other inconveniences when brought into contact with a solvent, an acid, an alkali or some other. The chemical-resistance-imparting treatment may be, for example, a physical treatment with heat, ultraviolet rays, visible rays, an electron beam, radioactive rays, or some other; or a chemical treatment of coating the porous layer with a chemical-resistant polymeric compound.

The chemical referred to herein denotes a known substance which causes a resin constituting any porous film in the prior art to be dissolved, swelled, shrunken, or decomposed to decline a function of the film as a porous film. In accordance with the species of the porous layer, and that of the resin that constitutes the base, the chemical may be of various species. Thus, the chemical is not specified without reservation. Specific examples of the chemical include intensely polar solvents such as dimethylsulfoxide (DMSO), N,N-dimethylformamide (DMF), N,N-dimethylacetamide (DMAc), N-methyl-2-pyrrolidone (NMP), 2-pyrrolidone, cyclohexanone, acetone, methyl acetate, ethyl acetate, ethyl lactate, acetonitrile, methylene chloride, chloroform, tetrachloroethane, and tetrahydrofuran (THF); inorganic salts such as sodium hydroxide, potassium hydroxide, calcium hydroxide, sodium carbonate, and potassium carbonate; amines such as triethylamine; an aqueous solution wherein an alkali such as ammonia is dissolved, or an alkaline organic-solvent solution; inorganic acids such as hydrogen chloride, sulfuric acid, and nitric acid; an aqueous solution wherein an acid, for example, an organic acid (such as acetic acid, phthalic acid or any other organic acid having a carboxylic acid) is dissolved, or an acidic organic-solvent solution; and mixtures thereof.

**EP 2 514 591 A1**

The chemical-resistant polymeric compound is not particularly limited as far as the compound is a compound very resistant against intensely polar solvents, alkalines, acids, and other chemicals. Examples thereof include thermosetting resins or photocurable resins, such as phenol resins, xylene resins, urea resins, melamine resins, benzoguanamine resins, benzoxazine resins, alkyd resins, triazine resins, furan resins, unsaturated polyesters, epoxy resins, silicon resins, polyurethane resins, and polyimide resins; and thermoplastic resins, such as polyvinyl alcohol, cellulose acetate resins, polypropylene resins, fluorine resins, phthalic acid resins, maleic acid resins, saturated polyesters, ethylene/vinyl alcohol copolymers, chitin, and chitosan. These polymeric compounds may be used alone or in the form of a mixture of two or more thereof. The polymeric compound may be a copolymer or a graft polymer.

In a case where the porous layer is coated with the chemical-resistant polymeric compound, the porous layer does not undergo a denaturation, such as dissolution or swelling to be deformed, at all when the porous layer layered body contacts an intensely polar solvent, an alkali, an acid or some other chemical as described above. Alternatively, the denaturation can be restrained to such a degree that a purpose of the use, or the usage is not affected. For, for example, an article used in such a manner that the period when the porous layer contacts chemicals is short, it is necessary only to give the porous layer such a chemical resistance that the porous layer is not denatured within the period.

In many cases, the chemical-resistant polymeric compound also has heat resistance. Thus, it is seldom feared that the porous layer is declined in heat resistance. The coating with the chemical-resistant polymeric compound also makes it possible to change characteristics of the porous layer surface. For example, the use of a fluorine resin also makes it possible to make the surface water-repellent. The use of an ethylene/vinyl alcohol copolymer also makes it possible to make the surface hydrophilic. Furthermore, the use of a phenol resin also makes it possible to make the surface water-repellent to neutral water, and make the surface hydrophilic to any aqueous alkaline solution. In such a way, appropriate selection of the species of the polymeric compound used for the coating makes it possible to change the porous layer surface in affinities (such as hydrophilicity) to a liquid.

Since the porous layer layered body of the present invention has the above-mentioned structure, the layered body may be used for various applications in a wide range of fields. Specifically, in the state that the porous layer makes use of the pore properties which this layer has as it is, the layered body may be used as a substrate material for the following: for example, a low-permittivity material, a separator, a cushion material, an ink-image receiving sheet, a test paper piece, an electrically insulating material, a heat insulating material, or some other. Furthermore, the layered body may be used, in the form of a functional laminate (composite material) wherein a different layer (such as a metal plating layer or a magnetic plating layer) is layered over the porous layer, for the following: for example, a substrate for a circuit, a heat radiating material (such as a heat sink or a heat radiating plate), an electromagnetic wave controlling material such as an electromagnetic wave shield or electromagnetic wave absorbent, an antenna, a cell culture substratum, or some other.

Next, a description is made about the functional laminate of the present invention. The functional laminate of the present invention is a laminate having the above-mentioned porous layer layered body, and having, over the surface of the porous layer of the layered body or a polymeric layer originating from the porous layer, a functional layer selected from the group consisting of an electroconductor layer, a dielectric layer, a semiconductor layer, an electric insulator layer, and a resistor layer, wherein the porous layer or the polymeric layer originating from the porous layer has a crosslinked structure formed with the crosslinking agent. This functional laminate may be called the "composite material" in the present specification.

The formation of the functional layer that may be of various types or the precursor layer thereof onto the porous layer surface may be attained by, for example, a plating or printing technique.

The metal plating layer may be formed, for example, as a thin metal coat, onto the porous layer surface. Examples of the metal which constitutes the metal plating layer include copper, nickel, silver, gold, tin, bismuth, zinc, aluminum, lead, chromium, iron, indium, cobalt, rhodium, platinum, and palladium; and alloys thereof. The metal coat may be an alloy coat containing an element other than metals, which may be of various types. Examples of the alloy include nickel-phosphorus, nickel-copper-phosphorus, nickel-iron-phosphorus, nickel-tungsten-phosphorus, nickel-molybdenum-phosphorus, nickel-chromium-phosphorus, and nickel-boron-phosphorus. For the metal plating layer, the above-mentioned metals may be used alone or in combination of two or more thereof. The layer may be a single layer, or a laminate composed of plural layers.

The material which constitutes the magnetic plating layer is not particularly limited as far as the material has magnetism. The material may be a ferromagnetic or paramagnetic material. Examples thereof include alloys, such as nickel-cobalt, cobalt-iron-phosphorus, cobalt-tungsten-phosphorus, and cobalt-nickel-manganese; and organic magnetic materials, such as a methoxyacetonitrile polymer and any other compound having a moiety from which a radical can be generated, a charge transfer complex of decamethylferrocene and any other metal complex compound, and polyacrylonitrile and any other compound that is a semi-graphitized carbon material.

For the formation of the metal plating layer, a known method, such as electroless plating or electrolytic plating, may be used. In the present invention, electroless plating is preferably used since the porous layer is made of the polymer component(s). A combination of electroless plating and electrolytic plating may be used.

16

As a plating solution used to form the metal plating layer, solutions having various compositions are known, and may be commercially available from manufacturers. The composition of the plating solution is not particularly limited, and it is advisable to select a composition matching with various desires (such as good appearance, hardness, abrasion resistance, discoloration resistance, corrosion resistance, electroconductivity, thermoconductivity, heat resistance, sliding performance, water repellency, wettability, solder-wettability, sealing performance, electromagnetic wave shielding property, and reflectivity).

An embodiment of the composite material-producing process of the present invention is performed by a method including the step of applying a photosensitive composition made of a compound about which a reactive group is optically generated onto a surface of at least one porous layer that constitutes the porous layer layered body of the present invention, thereby forming a photosensitive layer, the step of exposing the photosensitive layer through a mask to light, thereby generating reactive groups in the resultant exposed region, and the step of bonding the reactive groups generated in the exposed region to a metal, thereby forming a conductor pattern; or a method including the step of using, in the method described just above, a compound about which a reactive group is optically lost instead of the optically-reactive-group-generated compound, and losing the reactive groups in a region exposed to light, and the step of bonding a portion of the reactive groups that remains in the unexposed region to a metal, thereby forming a conductor pattern.

The optically-reactive-group-generated compound is not particularly limited as far as the compound is a compound generating, in the molecule thereof, a reactive group which can form a bond to a metal, which may be a metal ion. Examples thereof include photosensitive compounds containing at least one derivative selected from onium salt derivatives, sulfonium ester derivatives, carboxylic acid derivatives, and naphthoquinonediazide derivatives. These photosensitive compounds make it possible to form an electroconductive region having a fine pattern precisely since the compounds are rich in versatility, and can easily generate a reactive group bondable to a metal by irradiation with light.

The optically-reactive-group-lost compound is, for example, a compound that has a reactive group that can not only form a bond to a metal, which may be a metal ion, but also comes not to be easily dissolved in water or swelled therewith by a material that the reactive group generates a hydrophobic functional group by irradiation with light.

The reactive group, which is optically generated or lost, is not particularly limited as far as the group is a reactive group that can form a bond to a metal, which may be a metal ion. The group is, for example, a functional group ion-exchangeable with a metal ion, and is preferably a cation-exchangeable group. Examples of the cation-exchangeable group include acidic groups such as a -COOX group, a -SO$_3$X group, and a -PO$_3$X$_2$ group wherein Xs each represent a hydrogen atom, an alkali metal, an alkaline earth metal, or an ammonium group. Particularly preferred is a cation-exchangeable group having a pKa value of 7.2 or less since this species can form bonds to a sufficient amount of a metal per unit area, so that the photosensitive layer can easily gain desired electroconductivity. Such a reactive group will be exchanged with a metal ion in the next step, so that the layer will be able to exhibit a stable adsorption ability based on a reduced body or fine particles of the metal.

The light to be radiated is not particularly limited as far as the light can promote the generation or loss of the reactive group. The light may be, for example, light rays having wavelengths of 280 nm or more. In order to avoid deterioration of the porous layer layered body by the light exposure, it is preferred to use light rays having wavelengths of 300 nm or more (about 300 to 600 nm), in particular, light rays having wavelengths of 350 nm or more.

After the irradiation through the mask with the light, the workpiece is optionally washed, thereby making it possible to form a pattern made of the reactive groups in the exposed region or the unexposed region. The thus-produced reactive groups produced in the porous layer surface are bonded to a metal by a method described below to form a conductor pattern.

In the present invention, the method for bonding the reactive groups to the metal is preferably a method using electroless plating. It is known that electroless plating is generally useful as a method for laminating a metal onto a resin layer made of plastic or the like. In order to improve the adhesion between the porous layer surface and the metal, the surface may be beforehand subjected to degreasing, washing, neutralizing or a catalyst treatment, or some other treatment. For the catalyst treatment, use may be made of, for example, a catalytic metal nucleus forming technique of causing a catalytic metal which can promote the precipitation of a metal to adhere onto the surface to be treated. Examples of the catalytic metal nucleus forming technique include a method of bringing the surface into contact with a colloidal solution containing a catalytic metal (salt), followed by contact with an acid or alkali solution, or a reducing agent to promote chemical plating (a catalyzer-accelerator method); a method of bringing the surface into contact with a colloidal solution containing fine particles of a catalytic metal, and then removing the solvent and additives by heating or some other, to form catalytic metal nuclei (a metallic fine particle method); and a method of bringing the surface into contact with an acid or alkali solution containing a reducing agent, followed by contact with an acid or alkali solution of a catalytic metal to bring the surface into contact with an activating liquid, thereby precipitating a catalytic metal (a sensitizing-activating method).

In the catalyzer-accelerator method, the catalytic-metal-(salt)-containing solution may be, for example, a tin-palladium mixed solution, or a solution containing a metal (salt) such as copper sulfate. In the catalyzer-accelerator method, for example, the porous layer layered body is immersed in an aqueous solution of copper sulfate, an excessive portion of copper sulfate is optionally washed and removed, and next the workpiece is immersed in an aqueous solution of sodium borohydride, thereby making it possible to form catalytic nuclei of copper fine particles on the porous layer surface of the porous layer layered body. In the metallic fine particle method, for example, a colloidal solution wherein silver nanoparticles are dispersed is brought into contact with the porous layer surface, and then the workpiece is heated to remove the additives, such as the surfactant or the binder, thereby making it possible to precipitate catalytic nuclei made of the silver particles on the porous layer surface. In the sensitizing-activating method, for example, the surface is brought into contact with a solution of tin chloride in hydrochloric acid, followed by contact with a solution of palladium chloride in hydrochloric acid, thereby making it possible to precipitate catalytic nuclei made of palladium. The manner for bringing the porous layer layered body into contact with any one of these treating liquids may be, for example, a manner of painting the liquid onto the porous layer surface on which a metal plating layer is to be layered, or a manner of immersing the porous layer layered body into the treating liquid.

In a case where in the catalytic metal nucleus forming technique, the porous layer layered body having two surfaces, one thereof being made of its base and the other being made of its porous layer, is immersed in the treating liquid, it is preferred that the base is made of a homogenous layer. When the porous layer layered body, which has the single surface which the homogenous base constitutes, is immersed in the treating liquid, catalytic nuclei are formed not only on the porous layer surface of the porous layer layered body but also on the surface of the base; the catalytic nuclei adhere in a large amount onto the porous layer surface, which is large in surface area, and further the surface easily holds the nuclei while the catalytic nuclei do not precipitate easily on the homogenous base and further the nuclei easily drop away since the base film surface is smooth. Thus, by subsequent electroless plating, on the porous layer surface, on which the catalytic nuclei are formed in a sufficient amount, a metal plating layer will be able to be selectively formed.

Main examples of metal used in electroless plating include copper, nickel, silver, gold, and nickel-phosphorus. A plating solution used in electroless plating contains, for example, the following components besides the above-mentioned metals or salts thereof: a reducing agent such as formaldehyde, hydrazine, sodium hypophosphite, sodium borohydride, ascorbic acid or glyoxylic acid, and a complexing agent or precipitation controlling agent such as sodium acetate, EDTA, tartaric acid, malic acid, citric acid or glycine. Many of these components are commercially available and can easily be obtained. The electroless plating is performed by immersing, into the plating solution, the porous layer layered body treated as described above. When the porous layer layered body is subjected to electroless plating in the state that a protective sheet is bonded onto a single surface of this porous layer layered body, only the other surface undergoes the electroless plating. Thus, for example, the precipitation of the metal onto the base or some other can be prevented.

The thickness of the metal plating layer is not particularly limited, and may be appropriately selected in accordance with the usage. The thickness is, for example, about 0.01 to 20 $\mu$m, preferably about 0.1 to 10 $\mu$m. In order to make the thickness of the metal plating layer large efficiently, performed is, for example, a method of combining electroless plating with electrolytic plating to form the metal plating layer. In other words, by electroless plating, electroconductivity is given to the metal-coat-formed porous layer surface; thus, when the surface is subsequently subjected to electrolytic plating, which is better in efficiency, a thick metal plating layer can be obtained in a shorter period.

The method is suitable particularly as a method for yielding a composite material used in a circuit substrate, a heat radiating material or an electromagnetic wave controlling material.

Conventionally, circuit substrates are each generally formed by a method of bonding a copper foil piece onto a surface of a substrate made of glass/epoxy resin, polyimide or some other, and then removing unnecessary portions of the copper foil piece by etching to form wiring. However, according to such a conventional method, the formation of fine wiring corresponding to circuit substrates about which the wiring density is being made higher has been becoming difficult. In order to advance the technique of making wiring finer, it is necessary to cause a very thin copper foil piece to adhere strongly and closely onto a substrate made of glass/epoxy resin, polyimide or some other; however, the thin copper foil piece is very poor in handleability, so that the step of laminating the piece on the substrate is very difficult. The production of the thin copper foil piece is difficult itself, and is expensive. Furthermore, small is originally the adhesion force between glass/epoxy resin or polyimide, which is used as the raw material of the base, and the copper foil piece, so that there is caused a problem that when the technique of making wiring on any substrate finer is advanced, the wiring is peeled from the substrate.

Under such circumstances, the composite material of the present invention makes it possible to make fine openings in the porous layer surface of the porous layer layered body. Thus, in this case, a sufficient adhesion force can be certainly kept between the surface and a metal plating layer thereon. The present invention is therefore suitable as a material for a circuit substrate having fine wiring. When the composite material constitutes a material for a circuit substrate, its metal plating layer is preferably made of copper, nickel, silver or some other.

The porous layer layered body of the present invention is very useful as a circuit substrate produced by a method of forming fine wiring directly onto a porous layer surface. As the process for producing this circuit substrate, use may be made of any process that has been described as the process for producing the composite material of the present invention. According to this process, the porous layer layered body of the present invention is used, so that fine wiring strongly entangled with the porous layer can be formed. Additionally, the wiring can easily be formed with good precision by a light exposure technique. When the layered body is a film having, on a single surface thereof, a porous layer, single-sided wiring can be formed. When the layered body is a film having, on each surface thereof, a porous layer, double-sided wiring can be formed. When via wiring, through which both surfaces are connected to each other, is required, holes are made therein through a conventionally used drill or laser and the holes are filled or plated with an electroconductive paste. In this way, the via wiring can be formed. Hitherto, known has been a technique of using electroless plating to form wiring onto a porous body. However, porous bodies in the prior art have a problem of being small in strength to be poor in handleability, and being broken in the process for producing the bodies. On the other hand, when the porous layer layered body of the present invention is used, its porous layer is shaped to adhere closely to its base; thus, the present invention can provide a circuit substrate which can certainly keep a sufficient strength and excellent handleability.

The electromagnetic wave controlling material is used, as a material for shielding or absorbing electromagnetic waves, to relieve or restrain an effect produced onto a surrounding electromagnetic environment or an effect received by an instrument itself from a surrounding electromagnetic environment. Around us, there exist many electromagnetic wave generators, such as electric/electronic instruments, wireless instruments, and systems, due to spread of digital electronic instruments, personal computers and portable telephones. These radiate various electromagnetic waves. The electromagnetic waves radiated from these instruments may produce an effect onto a surrounding electromagnetic environment, or the instruments themselves are also affected from the surrounding electromagnetic environment. As measures thereagainst, electromagnetic wave controlling materials, such as an electromagnetic wave shield material or electromagnetic wave absorbent material, have been becoming important year and year. According to the composite material of the present invention, for example, its metal plating layer gives electroconductivity to shield electromagnetic waves, whereby an electromagnetic wave shielding property can be imparted. Moreover, an electromagnetic wave absorbent material is filled into the pores in the porous layer, whereby an electromagnetic wave absorbing performance can be imparted. Thus, the composite material is very useful as an excellent electromagnetic wave controlling material.

The metal plating layer constituting the electromagnetic wave controlling material is preferably a layer that can give electroconductivity. It is effective that the layer is made of, for example, nickel, copper or silver. When the composite material has a layer structure wherein a magnetic plating layer is formed on the surface of the porous layer by electroless plating, the composite material is useful as an electromagnetic wave absorbent material. The material used when the magnetic plating layer is formed by electroless plating is, for example, a magnetic material such as nickel, or an alloy made of nickel-cobalt, cobalt-iron-phosphorus, cobalt-tungsten-phosphorus, or cobalt-nickel-manganese. About the composite material of the present invention, a very thin and flexible material can be obtained, and the metal or magnetic material formed by plating is entangled with the porous layer; thus, the plating layer is not easily peeled so that the composite material can be improved in folding endurance. The composite material can be used in the state of being arranged at any place of an electronic instrument, or attached thereto.

The porous layer layered body of the present invention is also useful as a low-permittivity material. By the advent of the broadband times, it has become necessary to transmit a large volume of information at a high speed. Thus, the frequency used for electronic instruments has been made high. Electronic instruments used under the situation need to cope with high frequency signals. When any conventional wiring board (made mainly of glass epoxy resin) is used in a high frequency circuit, for example, the following problems are caused: (1) transmitted signals are delayed by a high permittivity; and (2) a high dielectric loss causes the interference or attenuation of signals, an increase in power consumption, and heat inside the circuit. It is said that a porous material is useful as a high-frequency wiring board material for solving these problems. This is because the porous material can attain a low relative permittivity thereof, while the relative permittivity of the air is as low as one. In the prior art, therefore, a porous substrate material has been required. However, in order to make the permittivity of a substrate low, it is necessary to make the porosity thereof high. As a result, there arises a problem that the substrate is lowered in strength. In the porous layer layered body of the present invention, a porous layer is layered on a base so that the layered body has a low-permittivity property and further the porous layer adheres closely onto the base; thus, the layered body can keep a strength sufficient for being handled, and is a medium preferred as a low-permittivity material.

When the porous layer layered body of the present invention is used as a circuit substrate material having a low permittivity, it is conceivable that as described above, a wiring board is produced by a method of bonding a copper foil piece onto the surface of the porous layer and then etching an unnecessary portion of the copper foil piece to be removed, thereby forming wiring. It has been becoming difficult to make wiring finer and make the density thereof higher. At present also, however, most circuit substrates are produced by this conventional method. The porous layer layered body of the present invention may be used according to this method. Thus, it can be said that the porous layer layered body is a useful material which can cope with a desire that has been becoming very intense, that is, a desire that the permittivity of the substrates is made low. In the case of using the porous layer layered body that is a layered body having fine pores low in interconnection, an etchant does not easily enter the inside of the porous layer when its copper foil piece on the layered body is etched. Thus, it does not easily occur that the copper foil piece is unfavorably etched from the rear side thereof. For this reason, good use can be made of a characteristic of the porous layer low in interconnection, which has independent pores.

An embodiment of a process for producing the composite material of the present invention may be a process based on a printing technique. Since the porous layer layered body of the present invention is excellent in printability, the layered body can be used in the state that a pattern is formed on the porous layer by printing. In this way, the composite material is used as an ink-image receiving sheet (printing medium). Thus, the following describes a printing technique in detail.

Ink-image receiving sheets may be called printing media, and are frequently used in a printing technique. At present, many printing processes are put into practical use. Examples of the printing technique include ink-jet printing, screen printing, dispenser printing, letterpress printing (flexography), sublimation type printing, offset printing, laser printer printing (toner printing), intaglio printing (gravure printing), contact printing, and micro-contact printing. Constituting components of an ink used therefor are not particularly limited, and examples thereof include a conductor, a dielectric, a semiconductor, an insulator, a resistor, and a colorant.

Advantages obtained when an electronic material is produced by printing are, for example, as follows: (1) the material can be produced through a simple process, (2) the process is a low-load process to the environment, wherein the amount of wastes is small, (3) the material can be produced in a short period with a low energy consumption, and (4) initial investment costs can be largely decreased. Actually, however, a highly minute printing that has not been realized so far is required, and the printing is technically difficult. Accordingly, about printing used for producing electronic materials, printing results are largely affected by not only the performance of printing machines but also properties of inks or ink-image receiving sheets. In the porous layer layered body of the present invention, a porous layer adheres closely to a base, and a fine porous structure of the porous layer can adhere closely to a printing plate without producing any gap because of the cushion performance thereof. Moreover, the layered body can absorb an ink and fix the ink precisely, so that the layered body can attain highly minute printing that has not been realized so far. Thus, the layered body is very favorably used. Since the porous layer adheres closely to the base, the layered body can ensure a strength sufficient for being handled. For example, printing can be continuously made thereon in a roll-to-roll manner, so that the production efficiency can be remarkably improved.

When an electronic material is produced by printing, the process for the printing may be any one of the above-mentioned processes. Specific examples of an electronic material produced by printing include electromagnetic wave controlling materials such as an electromagnetic wave shield and an electromagnetic wave absorbent, a circuit substrate, an antenna, and a heat radiating plate. Examples of the material are more specifically a liquid crystal display, an organic EL display, a field emission display (FED), an IC card, an IC tag, a solar battery, an LED element, an organic transistor, a condenser (capacitor), an electronic paper, a flexible battery, a flexible sensor, a membrane switch, a touch panel, and an EMI shield.

A process for producing the electronic material includes the step of printing, onto the surface of the porous layer (substrate), an ink containing an electronic material such as a conductor, a dielectric, a semiconductor, an insulator, or a resistor. For example, when a print is made on the surface of the porous layer (substrate) with an ink containing a dielectric, a condenser (capacitor) can be formed. Examples of the dielectric include barium titanate and strontium titanate. When a print is made thereon with an ink containing a semiconductor, a transistor or some other can be formed. Examples of the semiconductor include pentacene, liquid silicon, a fluorene-bithiophene copolymer (F8T2), and poly(3-hexylthiophene) (P3HT).

When a print is made thereon with an ink containing a conductor, wiring can be formed so that a flexible substrate, a TAB substrate, an antenna or some other can be produced. Examples of the conductor include electroconductive inorganic particles made of silver, gold, copper, nickel, ITO, carbon, and carbon nanotubes; and particles made of electroconductive organic polymers, such as polyaniline, polythiophene, polyacetylene and polypyrrole. Examples of the polythiophene include poly(ethylenedioxythiophene) (PEDOT). These may be used in the form of a solution or a colloidal ink. Of these examples, preferred are electroconductive particles that are inorganic particles. Particularly preferred are silver particles or copper particles from the viewpoint of balance between electric properties and costs. Examples of the form of the particles include a spherical form and a scaly form (flake form). The particle size is not particularly limited, and the particles may be particles in a scope from particles having an average particle diameter of several micrometers to the so-called nanoparticles, which have an average particle diameter of several nanometers. These particle species may be used in the form of a mixture thereof. A description is made just below about the electroconductive ink, giving, as an example thereof, an easily available silver ink (silver paste). However, the ink is not limited thereto, and an ink of any other type may be used.

A silver ink generally contains, as constituents thereof, silver particles, a surfactant, a binder, a solvent and others. In a different embodiment, by use of a nature that silver oxide is heated to be reduced, an ink containing particles of silver oxide is printed and then heated and reduced to be turned into silver wiring. In a further different embodiment, an ink containing an organic silver compound is printed, and then heated and decomposed to be turned into silver wiring.

The organic silver compound may be a compound soluble in a solvent. As the particles which constitute the silver ink, silver particles, silver oxide, an organic silver compound, and others may be used alone or in combination. Particle species having different diameters may be used in a mixture form. The temperature (firing temperature) for curing the silver ink after the ink is used to make a print may be appropriately selected in accordance with the composition of the ink, the particle diameter and others, and usually ranges from about 100 to 300°C. Since the porous layer layered body of the present invention is made of the organic material(s), the firing temperature is preferably a relatively low temperature to avoid deterioration thereof. In order to make the electric resistance of wiring thereon small, it is generally preferred to fire the layered body at a high temperature. It is necessary to select an ink having an appropriate curing temperature, and use the ink. Known examples of a commercially available product of the silver ink include inks "CA-2503" (trade name) manufactured by Daiken Chemical Co., Ltd., "NANO DOTITE XA9053" (trade name) manufactured by Fujikura Kasei Co., Ltd., "NPS" and "NPS-J" (trade names) (having an average particle diameter of about 5 nm) manufactured by Harima Chemicals, Inc., and "FINE SPHERE SVW102" (trade name) (having an average particle diameter of about 30 nm) manufactured by Nippon Paint Co., Ltd. It is preferred to select the particle diameter, the particle diameter distribution, and the blend proportion of a conductor or some other to be added to the ink, considering balance between an electric resistance required for a wiring board and the adhesion of the wiring.

In the case of screen printing, an ink is liable not to be held on a screen if the viscosity thereof is too low. Thus, it is preferred that the viscosity is somewhat high. Even when the particle diameter of the particles contained in the ink is large, no problem is caused. When the particle diameter is small, it is preferred to decrease the amount of the solvent. It is therefore preferred that the particle diameter is about 0.01 to 10 $\mu$m.

Wiring may be formed on only the single surface of the porous layer. When the porous layer is present on each of both surfaces of the base, the wiring may be formed on the surfaces. In the latter case, a via may be optionally made for connecting both the surfaces to each other. The via hole may be formed with a drill or by a laser. The conductor inside the via hole may be made of an electroconductive paste, or by plating.

The porous layer layered body may be used in the state that the surface of the wiring made of an electroconductive ink is coated with plating or an insulator. It is pointed out that silver wiring undergoes electromigration or ion migration more easily, as compared with copper wiring (the 2002, June 17 issue of Nikkei Electronics, p. 75). Thus, it is effective to coat the surface of wiring made of a silver ink with plating in order to improve the reliability of the wiring. Examples of the plating include silver plating, gold plating, and nickel plating. The plating may be performed by a known method.

Furthermore, the porous layer layered body may be used in the state that the surface of the wiring made of an electroconductive ink is coated with a resin. This structure can be preferably used for the protection or electrical insulation of the wiring, the prevention of the wiring from being oxidized or migrated, an improvement of the layered body in flexing property, and some other purpose. For example, it is feared that silver wiring and copper wiring are oxidized to be turned to silver oxide and copper oxide, respectively, thereby being lowered in electroconductivity. However, the coating of the surface of such wiring with the resin makes it possible to avoid the contact of oxygen or water with the wiring, thereby restraining a decline of the wiring in electroconductivity. The method for coating the surface of the wiring selectively with the resin is, for example, a syringe, a dispenser, screen printing, or ink jetting, using a curable resin or soluble resin that will be described later as the resin for the coating.

When the pores in the porous layer are kept after the formation of the wiring, the porous layer region is low in permittivity so that the layered body is favorably used as a high-frequency wiring board.

About the manner of using the porous layer layered body of the present invention, the layered body is used in the state that the pores in the porous layer remain as they are. Moreover, the porous layer layered body of the present invention may be used in the state that the void structure of the porous layer is caused to disappear.

When the wiring surface is coated with a resin, the resin does not easily invade the inside of the pores in a case where the porous layer has independent fine pores, which are low in interconnection. Thus, the void structure tends to be maintained. Contrarily, if the porous layer has fine pores having interconnection, the resin easily invades the inside of the pores so that the pore inside is filled with the resin. Thus, the void structure tends to disappear.

The resin for coating the wiring is not particularly limited, and is, for example, a curable resin usable with no solvent, or a soluble resin usable in the state of being dissolved in a solvent. When the soluble resin is used, it is necessary to perform the coating considering a reduction in the volume when the solvent has vaporized.

Examples of the curable resin include an epoxy resin, an oxetane resin, an acrylic resin, and a vinyl ether resin.

The epoxy resin may be of various types, and examples thereof include bisphenol resins such as bisphenol A type and bisphenol F type resins, novolak resins such as phenol novolak and cresol novolak resins, and other glycidyl ether type epoxy resins; alicyclic epoxy resins; and modified resins thereof. Usable examples of a commercially available product of the epoxy resin include "ARALDITE" manufactured by Huntsman Advanced Materials, "DENACOL" manufactured by Nagase ChemteX Corp., "CELLOXIDE" manufactured by Daicel Chemical Industries, Ltd., and "EPOTOHTO" manufactured by Tohto Kasei Co., Ltd. An epoxy resin cured product can be yielded by, for example, a method of: incorporating a curing agent into an epoxy resin to yield a curable resin composition; initiating, by effect of the composition, a curing reaction therein; and heating the system to promote the reaction. The curing agent for the epoxy resin may be, for example, an organic polyamine, an organic acid, an organic acid anhydride, a phenol, a polyamide resin, an isocyanate, or a dicyandiamide.

The epoxy resin cured product may also be yielded by a method of incorporating a curing catalyst called a latent curing agent into an epoxy resin to yield a curable resin composition, and then heating the composition or irradiating the composition with light rays, such as ultraviolet rays, to initiate a curing reaction therein. The latent curing agent may be a commercially available product such as "SUNAID SI" manufactured by Sanshin Chemical Industry Co., Ltd.

In the case of using, as the epoxy resin cured product, a product high in flexibility, a flexible article such as a flexible substrate can be produced. In the case of requiring an article to have heat resistance or high dimensional stability, the use of a composition that turns high in hardness after cured, as the curable resin composition, makes it possible that the article is used as a rigid substrate (hard substrate).

In a case where the epoxy resin is used for the coating, the curable resin composition is high in handleability when low in viscosity. Examples of the composition having this feature include a bisphenol F type composition, and an aliphatic polyglycidyl ether type composition.

The oxetane resin is, for example, a product "ARON OXETANE" manufactured by Toagosei Co., Ltd. An oxetane resin cured product can be yielded by a method of mixing, for example, a cationic photopolymerization initiator "IRGACURE 250" manufactured by Ciba Specialty Chemicals Inc. with an oxetane resin, and then irradiating the mixture with ultraviolet rays to initiate a curing reaction therein.

The soluble resin may be a commercially available product, such as a low-dielectric resin "OLIGO PHENYLENE ETHER" manufactured by Mitsubishi Gas Chemical Co., Inc., a polyamideimide resin "VYLOMAX" manufactured by Toyobo Co., Ltd., a polyimide ink "UPICOAT" manufactured by Ube Industries, Ltd., a polyimide ink "EVERLEC" manufactured by Tohto Chemical Industry Co., Ltd., a polyimide ink "ULIN COAT" manufactured by NI Material Co., a polyimide ink "Q-PILON" manufactured by PI Research & Development Co., Ltd., and a saturated polyester resin "NICHIGO POLYESTER", an acrylic solvent type pressure-sensitive adhesive "CORPONIEL" and an ultraviolet/electron ray curable resin "SHIKOH" each manufactured by The Nippon Synthetic Chemical Industry Co., Ltd.

The solvent used at the coating time, wherein the soluble resin is dissolved, may be appropriately selected from known organic solvents in accordance with the species of the resin. Typical examples of a resin solution (soluble resin solution) wherein the soluble resin is dissolved in a solvent include a resin solution wherein "OLIGO PHENYLENE ETHER" is dissolved in a versatile solvent such as methyl ethyl ketone or toluene; a resin solution wherein "VYLOMAX" is dissolved in a mixed solvent of ethanol and toluene (trade name: "HR15ET"); and a resin solution wherein "UPICOAT" is dissolved in triglyme.

The method for coating the wiring with the resin is not particularly limited, and may be, for example, a method of using a syringe, a spoon, a dispenser, screen printing, ink jetting, or some other means to develop (paint) the above-mentioned curable resin composition or soluble resin solution onto the porous layer surface and optionally removing an extra of the resin with a spatula or some other. The spatula may be, for example, one made of polypropylene, a fluorine resin such as Teflon (registered trade name), a rubber such as silicone rubber, or a resin such as polyphenylene sulfide; or one made of a metal such as stainless steel. The spatula is in particular preferably one made of a resin since the wiring or the porous layer is not easily injured therewith. The method may be a method of using, without using any spatula, a means capable of controlling the jet amount, such as a syringe, a dispenser, screen printing or ink jetting, to drop out an appropriate amount thereof onto the porous layer surface.

In order to develop the resin smoothly onto the porous layer surface, a resin low in viscosity is preferably used as an uncured resin. About a resin high in viscosity, the resin is used in the state of being lowered in viscosity in a manner of being heated to an appropriate temperature or some other manner, thereby making it possible to improve the resin in handleability. However, in a case where a curable resin is used, the curing reaction rate thereof is unfavorably raised when the resin is heated. Thus, heating more than required is not preferred since the heating makes the workability poor.

After the resin component is developed onto the porous layer surface, it is preferred to subject the workpiece to a heating treatment in order to promote the curing of the resin or volatilize the solvent. The method for the heating is not particularly limited. However, rapid heating may make the resultant uneven since the resin or the curing agent volatilizes, or the solvent volatilizes vigorously. Thus, the method is preferably a method of raising the temperature mildly. The temperature-raising may be continuous or intermittent. It is preferred to adjust the temperature and the period for each of the curing and the drying appropriately in accordance with the species of the resin or the solvent.

The composite material of the present invention may be an embodiment wherein the void structure of the porous layer is maintained, or one wherein the void structure of the porous layer is caused to disappear after the formation of the functional layer on the porous layer surface (after functionalization), so that the porous layer is preferably made transparent.

According to the porous layer layered body of the present invention, a highly minute print can be made on the porous layer by the pore properties of the porous layer. However, the porous structure causes irregular reflection of visible rays, so that the porous layer is whitened to be made opaque. Thus, when the layered body in this state is used as it is, the usage thereof is limited. Thus, a composition having a glass transition temperature of 20°C or higher is selected as the composition which constitutes the porous layer, whereby the void structure of the porous layer is lost through the heating treatment so that irregular reflection is restrained. As a result, the porous layer can be made transparent.

The transparent porous layer is realized by the disappearance of the void structure inside the porous layer that is caused by heating the porous layer layered body, wherein a functional layer (pattern) that may be of various types is formed on the porous layer surface, thereby softening the porous layer slightly.

Accordingly, the present invention is also related to the following aspects:

(13) A method of subjecting the layered body recited in any one of items (1) to (4) described above to a heating treatment at a temperature not lower than the glass transition temperature of the composition which constitutes the porous layer to cause the fine pores in the porous layer to disappear, thereby turning the porous layer to a transparent layer.

In this case, the porous-layer-constituting composition usually has a glass transition temperature of 20°C or higher, and is softened or deformed at a temperature that is not lower than the glass transition temperature (Tg) of the composition, lower than the heat-resistant temperature of the base, and further lower than the decomposition temperature of the porous-layer-constituting composition (containing polymer(s) as a main component, a crosslinking agent, and optional other components). Thus, although it depends on the species of the base, it is preferred that the porous-layer-constituting composition has a glass transition temperature of, for example, 280°C or lower, in particular 200°C or lower, or 130°C or lower.

The heating treatment for turning the porous layer to the transparent layer can be conducted at a temperature that is not lower than the glass transition temperature of the porous-layer-constituting composition, lower than the heat-resistant temperature of the base, and further lower than the decomposition temperature of the porous-layer-constituting composition. In other words, the upper limit of the heating treatment temperature is lower than a lower temperature of the heat-resistant temperature of the base, and the decomposition temperature of the porous-layer-constituting composition.

In order to conduct the heating treatment stably, the decomposition temperature (decomposition starting temperature) of the porous-layer-constituting composition is required to be higher than the glass transition temperature of the porous-layer-constituting composition by 15°C or more, preferably by 30°C or more, more preferably by 50°C or more. As this temperature difference is larger, the heating treatment can be more stably conducted. Thus, the upper limit of this temperature difference is not decided. In general, most polymer components decompose in the range of higher temperatures than the glass transition temperature (Tg) thereof by 200°C or more (Tg + 200°C); thus, the upper limit of this temperature difference may be 200°C.

By the heating treatment, the porous-layer-constituting composition is softened and deformed so that the fine pores disappear. Thus, the porous layer is turned to a transparent layer. Without using any solvent, the porous layer is turned to the porous layer only by the heating treatment.

(14) A functional laminate, comprising a base, a transparent layer containing a polymer as a main component on the base, and a functional layer selected from the group consisting of an electroconductor layer, a dielectric layer, a semiconductor layer, an electric insulator layer, and a resistor layer on the transparent layer, the functional laminate being obtained by performing:

the step of forming a layer selected from the group consisting of the eleetroconductor layer, the dielectric layer, the semiconductor layer, the electric insulator layer, the resistor layer, and a precursor layer of these layers over the surface of the porous layer of the layered body recited in any one of items (1) to (4) described above; the step of subjecting the resultant layered body to a heating treatment at a temperature not lower than the glass transition temperature of a composition which constitutes the porous layer to cause the fine pores in the porous layer to disappear, thereby turning the porous layer to a transparent layer, and the step of subjecting the workpiece to a heating treatment and/or an active energy ray radiating treatment, thereby forming a crosslinked structure with the crosslinking agent in the porous layer.

The "transparent layer containing a polymer as a main component" referred to herein is a layer corresponding to the above-mentioned "polymeric layer originating from the porous layer".

(15) The functional laminate according to item (14), wherein the functional layer is patterned.

(16) A process for producing a functional laminate comprising a base, a transparent layer containing a polymer as a main component on the base, and a functional layer selected from the group consisting of an electroconductor layer, a dielectric layer, a semiconductor layer, an electric insulator layer, and a resistor layer on the transparent layer, comprising:

the step of forming a layer selected from the group consisting of the electroconductor layer, the dielectric layer, the semiconductor layer, the electric insulator layer and the resistor layer, and a precursor layer of any one of the layers over the surface of the porous layer of the layered body recited in any one of items (1) to (4) described above;
the step of subjecting the resultant layered body to a heating treatment at a temperature not lower than the glass transition temperature of a composition which constitutes the porous layer to cause the fine pores in the porous layer to disappear, thereby turning the porous layer to a transparent layer, and
the step of subjecting the workpiece to a heating treatment and/or an active energy ray radiating treatment, thereby forming a crosslinked structure with the crosslinking agent in the porous layer.

The precursor layer of any one of the layers means, for example, a layer that can be turned to a conductor layer, a dielectric layer, a semiconductor layer, an electric insulator layer or a resistor layer by the heating treatment or other treatment after this precursor layer is formed.

Depending on the conditions for the heating treatment in the step of turning the porous layer to the transparent layer, the crosslinking agent may react to form a crosslinked structure. In such a case, it is advised to raise the temperature of the porous layer rapidly into a temperature range in which the porous layer softens, so as to complete the softening and the transparentization of the porous layer, and subsequently cause the porous layer to react with the crosslinking agent to form a crosslinked structure. If the crosslinked structure would be formed on ahead, the porous layer would not be softened any more so that the porous structure would be kept.

(Conversely, when the porous structure is desired to be kept, it is advisable to select the material to be used in such a manner that the softening temperature of the porous layer is made higher than the temperature for the heating treatment for forming the crosslinked structure. When the heating crosslinking treatment is conducted at a temperature lower than the softening temperature of the porous layer, the porous structure is kept also after the formation of the crosslinked structure.)

(17) The functional laminate-producing process according to item (16) described above, wherein the functional layer is patterned.

When the porous-layer-constituting composition has a melting temperature lower than the decomposition temperature thereof, it is preferred to conduct the above-mentioned heating treatment at a temperature lower than the melting temperature of the porous-layer-constituting composition. If the heating treatment is conducted at the melting temperature or higher, the porous layer composition melts so that the fine pores are lost. Thus, the porous layer is turned to a transparent layer. However, if the porous layer composition melts, the pattern of the patterned functional layer formed over the porous layer is unlikely to be maintained.

In the case of selecting, as the base, a light-permeable base which has a higher heat-resistant temperature than the glass transition temperature of the porous-layer-constituting composition, and has practical heat resistance at a temperature permitting the porous-layer-constituting composition to soften or deform, a functional laminate can be produced which has a transparent resin layer on the light-permeable base, and a functional pattern printed on the resin layer to be formed thereon. When the porous layer is transparentized in this way, the resultant functional laminate can be used for various materials for which light permeability is required, for example, a material for a display.

Herein, a description is made about the evaluation of the transparentization in the conversion of the porous layer to the transparent layer.
As shown by the equation described below, an index for the transparency of the transparent layer converted from the porous layer can be represented by the absolute value of the difference between the total light transmittance (%) of the used base itself, and the total light transmittance (%) of the transparentized laminate (the base + the transparent layer).

$$\text{The transparency (T) of the transparent layer} = |\text{ "the total light transmittance}$$

$$\text{(Ts) of the base itself" } - \text{ "the total light transmittance (Tst) of the laminate (the base + }$$

$$\text{the transparent layer)"}|$$

The reason why the absolute value of the difference between (Ts) and (Tst) is used in the equation is that the value (Tst) may be larger than the value (Ts). It appears that when fine irregularities are present in the surface of the base itself, the presence of the transparent layer on the surface causes the fine irregularities to be made flat and smooth to restrain irregular reflection, thereby making the value (Tst) larger than the value (Ts).

Considering a case where the present invention is used for an application for which transparentization is required, the value of the transparency (T) of the transparent layer is, for example, 0 to 30%, preferably 0 to 20%, more preferably 0 to 10%, in particular preferably 0 to 5%. If the transparency (T) of the transparent layer would be more than 30%, the conversion of the porous layer to the transparent layer would be insufficient. In the evaluation of the transparentization, it is necessary to measure the total light transmittance (%) of the laminate (the base + the transparent layer) at its region where no functional layer such as a conductor layer is formed. The functional layer generally inhibits the permeation of light rays. The total light transmittance may be measured by use of a haze meter, NDH-5000W, manufactured by Nippon Denshoku Industries Co., Ltd. in accordance with JIS K7136.

The thickness of the obtained transparent layer is calculated out on the basis of the thickness and the porosity of the porous layer.

$$\text{The thickness of the transparent layer} = \text{"the thickness of the porous layer" x}$$

$$(100 - \text{the porosity})/100$$

In the present invention, the thickness of the porous layer is 0.1 to 100 $\mu$m, and the porosity is 30 to 85%; thus, the thickness of the transparent layer may range from 0.015 5 to 70 $\mu$m. Referring to the above-mentioned respective preferred ranges of the thickness and the porosity of the porous layer, it is advisable to decide a desired thickness of the transparent layer appropriately.

When the transparentized resin layer originating from the porous layer is used in, for example, a wiring board, the wiring can easily be inspected. Moreover, when the wiring board is integrated into a device, the relationship between positions of its parts is easily recognizable. By these matters and others, the wiring board is favorably very good in handleability. Furthermore, it is preferred that the base of the porous layer layered body is high in transparency.

The base of the porous layer layered body used in the present invention is preferable since the base has such heat resistance that the base is not deformed at a heating treatment temperature for transparentizing the porous layer. If the base is deformed, the base is lowered in dimensional stability for a wiring substrate.

The upper limit temperature of the heating treatment for transparentizing the porous layer is varied in accordance with the base, and is not specified without reservation. When a polyimide is used for the base, the heating temperature is appropriately 400°C or lower, preferably 300°C or lower, in particular preferably 260°C or lower. The heating treatment period depends on the components which constitute the porous layer, and is not specified without reservation, either. The period is appropriately 1 minute to 3 hours, preferably about 3 minutes to 1 hour. The heating may be conducted at a single stage or two stages. In the case of using a functional material that can be fired at a low temperature, such as silver ink, it is allowable to print the ink, fire the ink, and then raise the temperature of the workpiece to transparentize the porous layer, or to set the temperature of the workpiece to a temperature applicable to both of the firing of the ink and the transparentizing treatment, and attain the two at a single stage.

When the transparentization of the porous layer is attained by a heating treatment, the porous-layer-constituting composition needs to have a glass transition temperature of 20°C or higher. If the glass transition temperature is lower than 20°C, the porous structure may be unfavorably changed even at room temperature.

The above-mentioned International Publication WO2007/097249 discloses that a porous layer layered body on which wiring is formed is wetted with a solvent to swell and soften the porous layer, thereby causing the void structure in the porous layer to disappear (paragraphs [0228] to [0232]), to transparentize the porous layer. However, after the swelling and softening of the porous layer, it is necessary to conduct a solvent drying treatment. Thus, the successive steps are complicated so that production costs increase. If the solubility of the porous layer in the used solvent is high, the porous layer itself is unfavorably dissolved so that the wiring pattern formed on the porous layer is not easily maintained. From this viewpoint, it is largely advantageous that the porous layer is turned to a transparent layer only by a heating treatment without using any solvent.

In the meantime, electromagnetic waves are generated from displays such as a PDP to produce a bad effect (noise) onto peripheral instruments. In order to prevent (shield) such electromagnetic waves, it is necessary to give an electromagnetic wave shielding function to a filter to be arranged on the front surface of a PDP. As the filter, a film on which wiring is laid into a lattice form is used.

Electromagnetic wave shield films having the above-mentioned use purpose generally have a structure wherein a metallic layer is layered on a film having high transparency (highly transparent film). The films can each be formed by, for example, a method of laying the metallic layer onto the highly transparent film by sputtering, or a method of bonding a copper foil piece or the like onto the highly transparent film and then etching the workpiece to make a metallic mesh. An example of the electromagnetic wave shield film is a film having a lattice pattern having a line width of 20 to 30 $\mu$m and a pitch (recurring interval) of about 300 $\mu$m.

According to the present invention, an electromagnetic wave shield film having the above-mentioned structure can be provided by forming wiring in a lattice form onto the porous layer layered body and then subjecting the workpiece to a transparentizing treatment. At this time, costs would be able to be decreased by forming the wiring simply, for example, in the manner that the wiring is provided using a printing method, such as screen printing.

Furthermore, the transparency of the wiring region can be made high by attaining the printing using ITO (indium tin oxide), which is a transparent (transmittance to visible rays: about 90%) conductor. Use may be made of, for example, an ITO ink manufactured by C.I. Kasei Co., Ltd., or an ITO ink "NANO METAL INK" manufactured by ULVAC Materials, Inc. The use of the transparent conductor may make it possible that the porous layer layered body is used as a flat panel display, such as a liquid crystal panel or an organic EL, a solar battery, a resistive touch panel, or some other. It is allowable to use a method of forming the wiring by use of a zinc oxide ink as another transparent conductor.

The composite material of the present invention may have a structure wherein the pores in the porous layer remain as they are. The composite material wherein the pores in the porous layer remain as they are mean that the porous layer has properties acting as a porous body. Specifically, it means, for example, that the composite material keeps a void structure equivalent to that of the porous layer when its conductor is formed by a printing technique. Such a composite material may have a structure wherein a different layer is layered, or a structure subjected to a treatment that may be of various types as far as the porous layer can hold properties acting as a porous body.

For example, when the pores in the porous layer are left as they are in order that the layered body can attain, for example, a low permittivity, the layered body is not subjected to any solvent treatment. However, only its wiring region may be coated with a resin by any one of the methods exemplified above to protect the wiring, insulate the wiring, prevent the oxidization of the wiring, and improve the layered body in flexing property.

As has been described about the resin-filling into the porous layer, the composite material can be made better in transparency when its wiring is formed by use of an ink of ITO or zinc oxide, which is a transparent conductor. The use of the composite material can be developed into articles for which such a property is required. By the above-mentioned method, the porous structure can be caused to disappear to make the porous layer transparent; however, in this case, the wiring thereon may be naked. It is preferred to coat the wiring with a resin as has been described hereinbefore, or form a coverlay thereon to insulate the wiring certainly from the others.

Usually, wiring boards are each joined to other parts or a substrate through solder, a connector or some other to cause electricity to flow into the board. Thus, the joint region needs to be filled with a resin in the state of being masked, or these members need to be coated with a resin except the joint region. This resin, that is, the resin for coating the wiring may be a curable resin or soluble resin, examples of which have been described above.

Wiring boards are not each composed of only wiring. Semiconductor chips, such as a TAB or COF, condensers, resistors and others can be joined onto the wiring board through solder, wire bonding, or some other. Furthermore, the formation of wiring or the mounting of parts may be applied to a single surface of the porous layer layered body, or to both surfaces thereof. Wiring boards may be stacked onto each other to make a multilayered wiring board.

In the composite material of the present invention, a coverlay may be layered on the porous layer. In the case of, for example, a flexible substrate, its wiring is generally coated with a coverlay made of a resin film such as a polyimide film or PET film to protect the wiring, insulate the wiring, prevent the oxidization of the wiring, and improve the composite material in flexing property. Examples of a film for the coverlay include "NIKAFLEX" manufactured by Nikkan Industries Co., Ltd., and products manufactured by Arisawa Manufacturing Co., Ltd.

The method for laminating the coverlay is, for example, a method of pressure-bonding, with heat, a coverlay film wherein an adhesive is painted on a single surface of a coverlay, such as a polyimide film or PET film, onto the porous layer after the layer is subjected to a solvent treatment. The adhesive of the coverlay film may be a known adhesive. The adhesive is in a semi-cured state (B stage) in many cases to be easily handled.

The coverlay is not necessarily required and may be omitted when only the coating of the wiring on the porous layer with the resin makes it possible to attain sufficiently the protection and the insulation of the wiring, the prevention thereof from being oxidized, and the maintenance in flexing property.

The porous layer layered body of the present invention may be used for an antenna better in high frequency property.

Recently, many wireless instruments have been used, and antennas have been needed to transmit and receive signals. Portable telephones, wireless LANs and IC cards have been remarkably spreading. The use of an antenna made of a low-permittivity material is preferred since the use can increase the gain of the antenna. For example, for IC cards and others, loop-form RFID antennas are used. At present, these antennas are produced by a subtractive technique (etching technique).

When a PET substrate or the like that has been used so far is replaced by the porous layer layered body of the present invention, an antenna better in high frequency property can be produced. A production process thereof may be according to the subtracting technique. Specifically, in the same manner as described about the process for producing a low-permittivity circuit substrate, the antenna-producing process may be a process of bonding a copper foil piece onto the surface of the porous layer layered body wherein its base is a resin film, or a surface of a porous film to form a resist pattern, and then removing an unnecessary portion of the copper foil piece by etching. Another example of the antenna-producing process may be a process of forming a resist pattern onto the porous layer layered body wherein its base is a metal foil piece of copper or some other metal, and then etching an unnecessary portion of the copper foil piece to be removed. The subtractive technique that has been conventionally performed has a long process to require much labor and cost. In the same manner as described about the ink-image receiving sheet, the antenna can be more simply produced at low costs by using a method of printing an ink containing a conductor to form the antenna.

JP-A-2006-237322 discloses a process for producing a copper polyimide substrate. The process is a process of making a surface of a polyimide resin film hydrophilic to form a physical development nuclei layer, forming a silver film thereon by a silver diffusion transfer process, and then plating the workpiece with copper.

Since any polyimide resin film is poor in bondability, the surface thereof needs to be subjected to an alkali treatment or a corona discharge treatment in order to modify the surface. However, in the porous layer layered body of the present invention, a porous layer having many fine pores can be formed on a polyimide resin film. Therefore, an adhesive layer thereon can enter the inside of the pores so that a more intense adhesion can be expected therebetween by an anchor effect thereof. Thus, the porous layer layered body can be favorably used for the above-mentioned purposes.

Examples

Hereinafter, the present invention will be described in more detail by way of working examples; however, the present invention is not limited to these working examples. First, individual measuring methods will be described.

The average pore diameter and the porosity of any porous layer were calculated out by methods described below. The average pore diameter and the porosity were gained, using only fine pores viewed in an electron microscopic photograph as objects.

1. Average pore diameter

About 30 or more pores were selected at will in a surface or a cross section of any layered body, and the respective areas thereof were measured from an electron microscopic photograph thereof. The average value thereof was defined as the average pore area Save. It was presupposed that the pores were true circles. The following equation was used to convert the pore diameter from the average pore area, and the resultant value was defined as the average pore diameter:

the average pore diameter [$\mu$m] in the surface or the inside = 2 x (Save/$\pi$)$^{1/2}$ wherein $\pi$ represents the circular constant.

2. Porosity

The porosity of the inside of the porous layer was calculated out in accordance with the following equation:

$$\text{the porosity [\%]} = 100 - 100 \times W/(\rho \cdot V) \text{ wherein V represents the volume } [\text{cm}^3]$$

of the porous layer; W, the weight [g] of the porous layer; and p, the density [g/cm$^3$] of the composition of the porous layer (the density of the porous layer composition is calculated out by distributing the densities of the individual components constituting the composition in accordance with their ratios by weight in the composition). The volume V and the weight W of the porous layer were calculated out by subtracting, from the volume and the weight of the laminate wherein the porous layer was layered on the base, the volume and the weight of the base, respectively.

In porous layer compositions, the density of each of the components is as follows:

the density of a polyamideimide, VYLOMAX N-100H: 1.45 [g/cm$^3$],
that of a polyimide, Pyre-M. L. RC5019: 1.43 [g/cm$^3$],
that of an epoxy resin, YDCN-700-5: 1.21 [g/cm$^3$],
that of an epoxy resin, jER 828: 1.17 [g/cm$^3$],
that of an epoxy resin, jER 834: 1.18 [g/cm$^3$],
that of an epoxy resin, jER 1001: 1.19 [g/cm$^3$],
that of an epoxy resin, jER 1004: 1.19 [g/cm$^3$], and
that of an epoxy resin, jER 152: 1.21 [g/cm$^3$].

3. Tape peeling test

The interlayer adhesion between a base and a porous layer of any layered body in an uncrosslinked state was measured by the following tape peeling test:

(i) A masking tape "FILM MASKING TAPE No. 603 (#25)" manufactured by Teraoka Seisakusho Co., Ltd., having a width of 24 mm, is attached onto the surface of the porous layer of the layered body over a length of 50 mm from an end of the tape. The attached tape is pressure-bonded thereon with a roller (oil-resistant hard rubber roller No. 10, manufactured by Holbein Art Material Inc.) having a diameter of 30 mm and giving a load of 200 gf.
(ii) A universal tensile tester [trade name: "TENSILON RTA-500", manufactured by Orientic Co., Ltd.] is used to pull the other end of the tape at a peel rate of 50 mm/minute, thereby peeling the tape into a T-shape.
(iii) It is observed whether or not interfacial peeling is caused between the porous layer and the base.

4. Adhesion evaluating test (cross-cut method)

The interlayer adhesion between a base and a porous layer of any layered body before and after the layered body was subjected to a heating crosslinking treatment was measured in accordance with an adhesion evaluating test (cross-cut method) according to JIS K 5600-5-6.
In a sample thereof, cross-cut lines having a cut interval of 2 mm were formed to make this test. A transparent pressure-sensitive adhesive tape used therefor was Cellotape (registered trade name) NO. 405 manufactured by Nichiban Co., Ltd. and having a width of 24 mm (adhesion force: 4.00 N/10 mm). An evaluation made after the tape was peeled was also in accordance with JIS K 5600-5-6.
Evaluation classification (an outline thereof is described. Details thereof are described in JIS K 5600-5-6):

0: No peeling is caused in any one of the squares.
1: The percentage of an area affected in the cross-cut region is clearly 5% or less.
2: The percentage of an area affected in the cross-cut region is clearly more than 5%, but is 15% or less.
3: The percentage of an area affected in the cross-cut region is clearly more than 15%, but is 35% or less.
4: The percentage of an area affected in the cross-cut region is clearly more than 35%, but is 65% or less.
5: The degree of the peeling is over that classified into the class 4.

Chemical resistance evaluating test (solubility of a porous layer in NMP)

About a porous layer of any layered body before and after the layered body was subjected to a heating crosslinking treatment, a chemical resistance test was made as follows.
A sample of the layered body was cut into a piece having a size of about 40 mm x 30 mm, and a syringe was used to drop out, on the porous layer thereof, one drop (about 26 mg) ofN-methyl-2-pyrrolidone (NMP). After 2 minutes, the sample was immersed in a large volume (about 1 liter) of water, and then the water was stirred to wash away NMP. Thereafter, the sample was taken out, and naturally dried on a waste cloth at room temperature. After the drying, the state of the sample was observed with the naked eye.

[Example 1: porous layer layered body A]

The following were mixed with each other: a polyamideimide resin solution (trade name: "VYLOMAX N-100H" manufactured by Toyobo Co., Ltd.; solid content concentration: 20% by weight; solvent: NMP (N-methyl-2-pyrrolidone); solution viscosity: 350 dPa·s/25°C); a novolak type epoxy resin (trade name: "YDCN-700-5", manufactured by Tohto Kasei Co., Ltd.) as a crosslinking agent; and NMP as a solvent. The blend ratio of the polyamideimide resin/NMP/the novolak type epoxy resin was a ratio by weight of 15/85/5. In this way, a film-forming material solution was obtained. A polyimide film (trade name: "KAPTON 200H" manufactured by Du Pont-Toray Co., Ltd.; thickness: 50 μm) as a base

was fixed on a glass plate with a tape. A film applicator was used to cast the material solution, the temperature of which was set to 25°C, thereon under a condition that the gap between the film applicator and the base was 51 $\mu$m. After the casting, the workpiece was rapidly put into a container having a humidity of about 100% and a temperature of 50°C, and then kept for 4 minutes. Thereafter, the workpiece was immersed in water to coagulate the cast solution. Next, without peeling the coagulated matter from the base, the workpiece was naturally dried at room temperature to yield a layered body A wherein a porous layer was layered on the base. The thickness of the porous layer was about 10 $\mu$m, and the total thickness of the layered body was about 60 $\mu$m.

About the resultant layered body A, a tape peeling test was made. As a result, no interfacial peeling was caused between the base and the porous layer. This layered body A was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.5 $\mu$m. The porosity of the inside of the porous layer was 80%.

[Example 2: porous layer layered body B]

A layered body B wherein a porous layer was layered on a base was yielded by making the same operations as in Example 1 except that a film-forming material solution was yielded by mixing the polyamideimide resin, NMP and the novolak type epoxy resin with each other to set the ratio by weight of the polyamideimide resin/NMP/the novolak type epoxy resin to 15/85/10. The thickness of the resultant porous layer was about 11 $\mu$m, and the total thickness of the layered body was about 61 $\mu$m.

About the resultant layered body B, a tape peeling test was made. As a result, no interfacial peeling was caused between the base and the porous layer. This layered body B was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.3 $\mu$m. The porosity of the inside of the porous layer was 77%.

[Example 3: porous layer layered body C]

A layered body C wherein a porous layer was layered on a base was yielded by making the same operations as in Example 1 except that a film-forming material solution was yielded by mixing the polyamideimide resin, NMP and the novolak type epoxy resin with each other to set the ratio by weight of the polyamideimide resin/NMP/the novolak type epoxy resin to 15/85/15. The thickness of the resultant porous layer was about 21 $\mu$m, and the total thickness of the layered body was about 71 $\mu$m.

About the resultant layered body C, a tape peeling test was made. As a result, no interfacial peeling was caused between the base and the porous layer. This layered body C was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.5 $\mu$m. The porosity of the inside of the porous layer was 75%.

[Comparative Example 1: porous layer layered body D]

A layered body D wherein a porous layer was layered on a base was yielded by making the same operations as in Example 1 except that a film-forming material solution was yielded by mixing the polyamideimide resin and NMP with each other to set the ratio by weight of the polyamideimide resin/NMP to 15/85 without adding any crosslinking agent to the film-forming material solution. The thickness of the resultant porous layer was about 15 $\mu$m, and the total thickness of the layered body was about 65 $\mu$m.

About the resultant layered body D, a tape peeling test was made. As a result, no interfacial peeling was caused between the base and the porous layer. This layered body D was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.5 $\mu$m. The porosity of the inside of the porous layer was 82%.

[Example 4: porous layer layered body E]

A layered body E wherein a porous layer was layered on a base was yielded by making the same operations as in Example 1 except that a bisphenol A type epoxy resin (trade name: "jER 828", manufactured by Japan Epoxy Resins Co., Ltd.) was used as a crosslinking agent, and a film-forming material solution was yielded by mixing the polyamideimide resin, NMP and the bisphenol A type epoxy resin with each other to set the ratio by weight of the polyamideimide resin/NMP/the bisphenol A type epoxy resin to 20/80/10. The thickness of the resultant porous layer was about 23 $\mu$m, and the total thickness of the layered body was about 73 $\mu$m.

About the resultant layered body E, a tape peeling test was made. As a result, no interfacial peeling was caused between the base and the porous layer. This layered body E was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.5 $\mu$m. The porosity of the inside of the porous layer was 72%.

[Example 5: porous layer layered body F]

A layered body F wherein a porous layer was layered on a base was yielded by making the same operations as in Example 1 except that a bisphenol A type epoxy resin (trade name: "jER 834", manufactured by Japan Epoxy Resins Co., Ltd.) was used as a crosslinking agent, and the film-forming material solution was yielded by mixing the polyamideimide resin, NMP and the bisphenol A type epoxy resin with each other to set the ratio by weight of the polyamideimide resin/NMP/the bisphenol A type epoxy resin to 20/80/10. The thickness of the resultant porous layer was about 29 $\mu$m, and the total thickness of the layered body was about 79 $\mu$m.

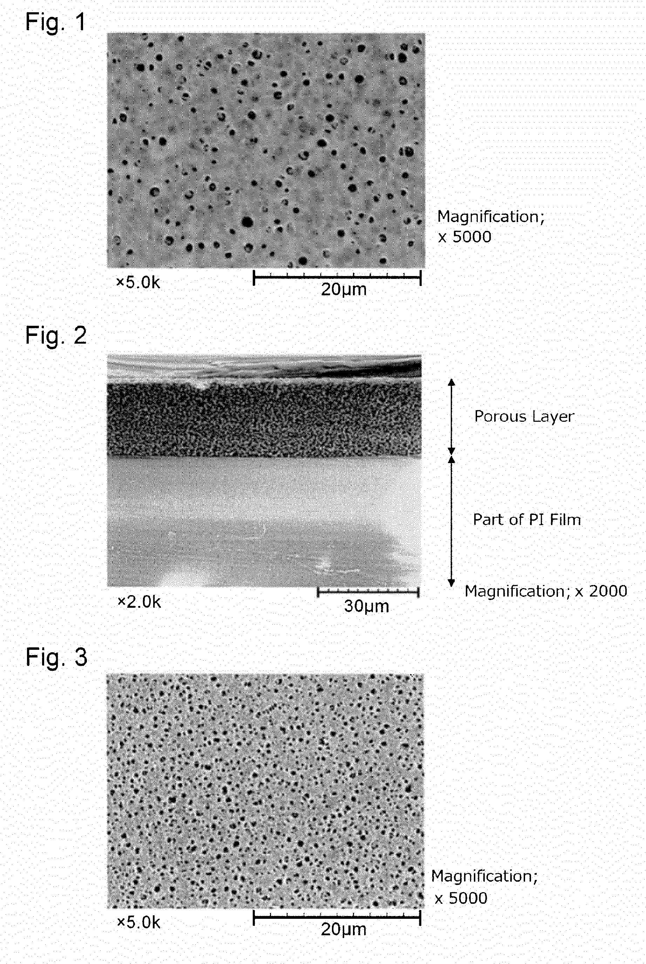

About the resultant layered body F, a tape peeling test was made. As a result, no interfacial peeling was caused between the base and the porous layer. This layered body F was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 2.0 $\mu$m. The porosity of the inside of the porous layer was 72%. In Fig. 1 is shown an electron microscopic photograph (power: x 5000) of the porous layer surface, and in Fig. 2 is shown an electron microscopic photograph (power: x 2000) of a cross section of the layered body.

[Example 6: porous layer layered body G]

A layered body G wherein a porous layer was layered on a base was yielded by making the same operations as in Example 1 except that a bisphenol A type epoxy resin (trade name: "jER 1001", manufactured by Japan Epoxy Resins Co., Ltd.) was used as a crosslinking agent, and a film-forming material solution was yielded by mixing the polyamideimide resin, NMP and the bisphenol A type epoxy resin with each other to set the ratio by weight of the polyamideimide resin/NMP/the bisphenol A type epoxy resin to 20/80/10. The thickness of the resultant porous layer was about 34 $\mu$m, and the total thickness of the layered body was about 84 $\mu$m.

About the resultant layered body G, a tape peeling test was made. As a result, no interfacial peeling was caused between the base and the porous layer. This layered body G was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.8 $\mu$m. The porosity of the inside of the porous layer was 70%.

[Example 7: porous layer layered body H]

A layered body H wherein a porous layer was layered on a base was yielded by making the same operations as in Example 1 except that a bisphenol A type epoxy resin (trade name: "jER 1004", manufactured by Japan Epoxy Resins Co., Ltd.) was used as a crosslinking agent, and a film-forming material solution was yielded by mixing the polyamideimide resin, NMP and the bisphenol A type epoxy resin with each other to set the ratio by weight of the polyamideimide resin/NMP/the bisphenol A type epoxy resin to 20/80/10. The thickness of the resultant porous layer was about 30 $\mu$m, and the total thickness of the layered body was about 80 $\mu$m.

About the resultant layered body H, a tape peeling test was made. As a result, no interfacial peeling was caused between the base and the porous layer. This layered body H was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.8 $\mu$m. The porosity of the inside of the porous layer was 71 %.

[Example 8: porous layer layered body I]

A layered body I wherein a porous layer was layered on a base was yielded by making the same operations as in Example 1 except that a phenol novolak type epoxy resin (trade name: "jER 152", manufactured by Japan Epoxy Resins Co., Ltd.) was used as a crosslinking agent, and a film-forming material solution was yielded by mixing the polyamideimide resin, NMP and the phenol novolak type epoxy resin with each other to set the ratio by weight of the polyamideimide resin/NMP/the phenol novolak type epoxy resin to 20/80/10. The thickness of the resultant porous layer was about 31 $\mu$m, and the total thickness of the layered body was about 81 $\mu$m.

About the resultant layered body I, a tape peeling test was made. As a result, no interfacial peeling was caused between the base and the porous layer. This layered body I was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.5 $\mu$m. The porosity of the inside of the porous layer was 72%.

[Comparative Example 2: porous layer layered body J]

A layered body J wherein a porous layer was layered on a base was yielded by making the same operations as in Example 1 except that a polyamideimide resin solution (trade name: "VYLOMAX N-100H" manufactured by Toyobo Co., Ltd.; solid content concentration: 20% by weight; solvent: NMP; solution viscosity: 350 dPa·s/25°C) was used, as it was, as a film-forming material solution without adding any crosslinking agent to the film-forming material solution. The thickness of the resultant porous layer was about 14 $\mu$m, and the total thickness of the layered body was about 64 $\mu$m. In other words, in the film-forming material solution, the ratio by weight of the polyamideimide resin to NMP was 20/80.

About the resultant layered body J, a tape peeling test was made. As a result, no interfacial peeling was caused between the base and the porous layer. This layered body J was observed through an electron microscope. As a result, the porous layer adhered closely to the polyimide film, and a skin layer was basically formed on the surface of the porous layer. Throughout the inside of the porous layer, there were independent and substantially homogeneous fine pores having an average pore diameter of about 1.2 $\mu$m. The porosity of the inside of the porous layer was 77%.

[Example 9: porous layer layered body K]

The following were mixed with each other: a polyamideimide resin (trade name: "TORLON AI-10" manufactured by Solvay Advanced Polymers); NMP as a solvent; and a bisphenol A type epoxy resin (trade name: "jER 828", manufactured by Japan Epoxy Resins Co., Ltd.) as a crosslinking agent. The blend ratio of the polyamideimide resin/NMP/the bisphenol A type epoxy resin was a ratio by weight of 25/75/5. In this way, a film-forming material solution was obtained. A polyimide film (trade name: "KAPTON 200H" manufactured by Du Pont-Toray Co., Ltd.; thickness: 50 $\mu$m) as a base was fixed on a glass plate with a tape. A film applicator was used to cast the material solution, the temperature of which was set to 25°C, thereon under a condition that the gap between the film applicator and the base was 25 $\mu$m. After the casting, the workpiece was rapidly put into a container having a humidity of about 100% and a temperature of 50°C, and then kept for 4 minutes. Thereafter, the workpiece was immersed in water to coagulate the cast solution. Next, without peeling the coagulated matter from the base, the workpiece was naturally dried at room temperature to yield a layered body K wherein a porous layer was layered on the base. The thickness of the porous layer was about 20 $\mu$m, and the total thickness of the layered body was about 70 $\mu$m.

About the resultant layered body K, a tape peeling test was made. As a result, no interfacial peeling was caused between the base and the porous layer. This layered body K was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.7 $\mu$m. The porosity of the inside of the porous layer was 74%.

[Example 10: porous layer layered body L]

A layered body L wherein a porous layer was layered on a base was yielded by making the same operations as in Example 9 except that a phenol novolak type epoxy resin (trade name: "jER 152", manufactured by Japan Epoxy Resins Co., Ltd.) was used as a crosslinking agent, and a film-forming material solution was yielded by mixing the polyamideimide resin, NMP and the phenol novolak type epoxy resin with each other to set the ratio by weight of the polyamideimide resin/NMP/the phenol novolak type epoxy resin to 25/75/5. The thickness of the resultant porous layer was about 18 μm, and the total thickness of the layered body was about 68 μm.

About the resultant layered body L, a tape peeling test was made. As a result, no interfacial peeling was caused between the base and the porous layer. This layered body L was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.7 μm. The porosity of the inside of the porous layer was 72%.

[Comparative Example 3: porous layer layered body M]

A layered body M wherein a porous layer was layered on a base was yielded by making the same operations as in Example 9 except that a film-forming material solution was yielded by mixing the polyamideimide resin and NMP with each other to set the ratio by weight of the polyamideimide resin/NMP to 25/75 without adding any crosslinking agent to the film-forming material solution. The thickness of the resultant porous layer was about 20 μm, and the total thickness of the layered body was about 70 μm.

About the resultant layered body M, a tape peeling test was made. As a result, no interfacial peeling was caused between the base and the porous layer. This layered body M was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.7 μm. The porosity of the inside of the porous layer was 76%.

[Example 11: porous layer layered body N]

The following were mixed with each other: a polyimide resin solution (trade name: "Pyre-M. L. RC5019" manufactured by I. S. T. Co.; solid content concentration: 15.7% by weight; solvent: NMP; solution viscosity: 69.1 dPa·s/ 25°C); and a bisphenol A type epoxy resin (trade name: "jER 828", manufactured by Japan Epoxy Resins Co., Ltd.) as a crosslinking agent. The blend ratio of the polyimide resin/NMP/the bisphenol A type epoxy resin was a ratio by weight of 15.7/84.3/10. In this way, a film-forming material solution was obtained. A polyimide film (trade name: "KAPTON 200H" manufactured by Du Pont-Toray Co., Ltd.; thickness: 50 μm) as a base was fixed on a glass plate with a tape. A film applicator was used to cast the material solution, the temperature of which was set to 25°C, thereon under a condition that the gap between the film applicator and the base was 51 μm. After the casting, the workpiece was rapidly put into a container having a humidity of about 100% and a temperature of 50°C, and then kept for 4 minutes. Thereafter, the workpiece was immersed in water to coagulate the cast solution. Next, without peeling the coagulated matter from the base, the workpiece was naturally dried at room temperature to yield a layered body N wherein a porous layer was layered on the base. The thickness of the porous layer was about 35 μm, and the total thickness of the layered body was about 85 μm.

About the resultant layered body N, a tape peeling test was made. As a result, no interfacial peeling was caused between the base and the porous layer. This layered body N was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 3.0 μm. The porosity of the inside of the porous layer was 63%.

[Comparative Example 4: porous layer layered body O]

A layered body O wherein a porous layer was layered on a base was yielded by making the same operations as in Example 11 except that a polyimide resin solution (trade name: "Pyre-M. L. RC5019" manufactured by I. S. T. Co.; solid content concentration: 15.7% by weight; solvent: NMP; solution viscosity: 69.1 dPa·s/25°C) was used, as it was, as a film-forming material solution without adding any crosslinking agent to the film-forming material solution. The thickness of the resultant porous layer was about 17 μm, and the total thickness of the layered body was about 67 μm. In other words, in the film-forming material solution, the ratio by weight of the polyimide resin to NMP was 15.7/84.3.

About the resultant layered body O, a tape peeling test was made. As a result, no interfacial peeling was caused between the base and the porous layer. This layered body O was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 5.0 $\mu$m. The porosity of the inside of the porous layer was 65%.

[Example 12: porous layer layered body P]

A layered body P wherein a porous layer was layered on a base was yielded by making the same operations as in Example 4 except that the following was used instead of the polyimide film (trade name: "KAPTON 200H" manufactured by Du Pont-Toray Co., Ltd.; thickness: 50 $\mu$m) as the base: a surface-treated rolled copper foil piece (trade name: "RCF-T5B-18", manufactured by Fukuda Metal Foil & Powder Co., Ltd.; thickness: 18 $\mu$m). The thickness of the resultant porous layer was about 32 $\mu$m, and the total thickness of the layered body was about 50 $\mu$m.

About the resultant layered body P, a tape peeling test was made. As a result, no interfacial peeling was caused between the base and the porous layer. This layered body P was observed through an electron microscope. As a result, the porous layer adhered closely to the polyimide film, and recognized was a tendency that a skin layer was basically formed on the surface of the porous layer. Throughout the inside of the porous layer, there were independent and substantially homogeneous fine pores having an average pore diameter of about 1.5 $\mu$m. The porosity of the inside of the porous layer was 70%.

[Example 13: porous layer layered body Q]

The following were mixed with each other: a polyamideimide resin solution (trade name: "VYLOMAX N-100H" manufactured by Toyobo Co., Ltd.; solid content concentration: 20% by weight; solvent: NMP; solution viscosity: 350 dPa·s/25°C); NMP as a solvent; polyvinyl pyrrolidone (molecular weight: 50000) as a water-soluble polymer; and a bisphenol A type epoxy resin (trade name: "jER 828", manufactured by Japan Epoxy Resins Co., Ltd.) as a crosslinking agent. The blend ratio of the polyamideimide resin/NMP/polyvinyl pyrrolidone/the bisphenol A type epoxy resin was a ratio by weight of 15/85/25/15. In this way, a film-forming material solution was obtained. A polyimide film (trade name: "KAPTON 200H" manufactured by Du Pont-Toray Co., Ltd.; thickness: 50 $\mu$m) as a base was fixed on a glass plate with a tape. A film applicator was used to cast the material solution, the temperature of which was set to 25°C, thereon under a condition that the gap between the film applicator and the base was 51 $\mu$m. After the casting, the workpiece was rapidly put into a container having a humidity of about 100% and a temperature of 50°C, and then kept for 4 minutes. Thereafter, the workpiece was immersed in water to coagulate the cast solution. Next, without peeling the coagulated matter from the base, the workpiece was naturally dried at room temperature to yield a layered body Q wherein a porous layer was layered on the base. The thickness of the porous layer was about 20 $\mu$m, and the total thickness of the layered body was about 70 $\mu$m.

About the resultant layered body Q, a tape peeling test was made. As a result, no interfacial peeling was caused between the base and the porous layer. This layered body Q was observed through an electron microscope. As a result, the porous layer adhered closely to the polyimide film, and throughout the inside of the porous layer, there were substantially homogeneous fine pores having interconnection and an average pore diameter of about 1.5 $\mu$m. The porosity of the inside of the porous layer was 69%.

[Example 14: porous layer layered body R]

A layered body R wherein a porous layer was layered on a base was yielded by making the same operations as in Example 13 except that a film-forming material solution was yielded by mixing the polyamideimide resin, NMP, polyvinyl pyrrolidone and the bisphenol A type epoxy resin with each other to set the ratio by weight of the polyamideimide resin/NMP/polyvinyl pyrrolidone/the bisphenol A type epoxy resin to 15/85/25/20. The thickness of the resultant porous layer was about 20 $\mu$m, and the total thickness of the layered body was about 70 $\mu$m.

About the resultant layered body R, a tape peeling test was made. As a result, no interfacial peeling was caused between the base and the porous layer. This layered body R was observed through an electron microscope. As a result, the porous layer adhered closely to the polyimide film, and throughout the inside of the porous layer, there were substantially homogeneous fine pores having interconnection and an average pore diameter of about 1.5 $\mu$m. The porosity of the inside of the porous layer was 65%.

[Comparative Example 5: porous layer layered body S]

A layered body S wherein a porous layer was layered on a base was yielded by making the same operations as in Example 13 except that a film-forming material solution was yielded by mixing the polyamideimide resin, NMP, and polyvinyl pyrrolidone with each other to set the ratio by weight of the polyamideimide resin/NMP/polyvinyl pyrrolidone to 15/85/25 without adding any crosslinking agent to the film-forming material solution. The thickness of the resultant porous layer was about 16 μm, and the total thickness of the layered body was about 66 μm.

About the resultant layered body S, a tape peeling test was made. As a result, no interfacial peeling was caused between the base and the porous layer. This layered body S was observed through an electron microscope. As a result, the porous layer adhered closely to the polyimide film, and throughout the inside of the porous layer, there were substantially homogeneous fine pores having interconnection and an average pore diameter of about 1.0 μm. The porosity of the inside of the porous layer was 72%.

[Example 15: porous layer layered body T]

A layered body T wherein a porous layer was layered on a base was yielded by making the same operations as in Example 13 except that as the water-soluble polymer, polyethylene glycol (average molecular weight: 360 to 440) was used, and a film-forming material solution was yielded by mixing the polyamideimide resin, NMP, polyethylene glycol, and the bisphenol A type epoxy resin with each other to set the ratio by weight of the polyamideimide resin/NMP/ polyethylene glycol/the bisphenol A type epoxy resin to 15/85/25/10. The thickness of the resultant porous layer was about 7 μm, and the total thickness of the layered body was about 57 μm.

About the resultant layered body T, a tape peeling test was made. As a result, no interfacial peeling was caused between the base and the porous layer. This layered body T was observed through an electron microscope. As a result, the porous layer adhered closely to the polyimide film, and throughout the inside of the porous layer, there were substantially homogeneous fine pores having interconnection and an average pore diameter of about 1.0 μm. The porosity of the inside of the porous layer was 39%.

[Example 16: porous layer layered body U]

The following were mixed with each other: a polyamideimide resin solution (trade name: "VYLOMAX N-100H" manufactured by Toyobo Co., Ltd.; solid content concentration: 20% by weight; solvent: NMP; solution viscosity: 350 dPa·s/25°C); NMP as a solvent; polyvinyl pyrrolidone (molecular weight: 10000) manufactured by Aldrich Co. as a water-soluble polymer; and a bisphenol A type epoxy resin (trade name: "jER 828", manufactured by Japan Epoxy Resins Co., Ltd.) as a crosslinking agent. The blend ratio of the polyamideimide resin/NMP/polyvinyl pyrrolidone/the bisphenol A type epoxy resin was a ratio by weight of 15/85/25/10. In this way, a film-forming material solution was obtained. A polyimide film (trade name: "KAPTON 200H" manufactured by Du Pont-Toray Co., Ltd.; thickness: 50 μm) as a base was fixed on a glass plate with a tape. A film applicator was used to cast the material solution, the temperature of which was set to 25°C, thereon under a condition that the gap between the film applicator and the base was 51 μm. After the casting, the workpiece was rapidly put into a container having a humidity of about 100% and a temperature of 50°C, and then kept for 4 minutes. Thereafter, the workpiece was immersed in water to coagulate the cast solution. Next, without peeling the coagulated matter from the base, the workpiece was naturally dried at room temperature to yield a layered body U wherein a porous layer was layered on the base. The thickness of the porous layer was about 23 μm, and the total thickness of the layered body was about 73 μm.

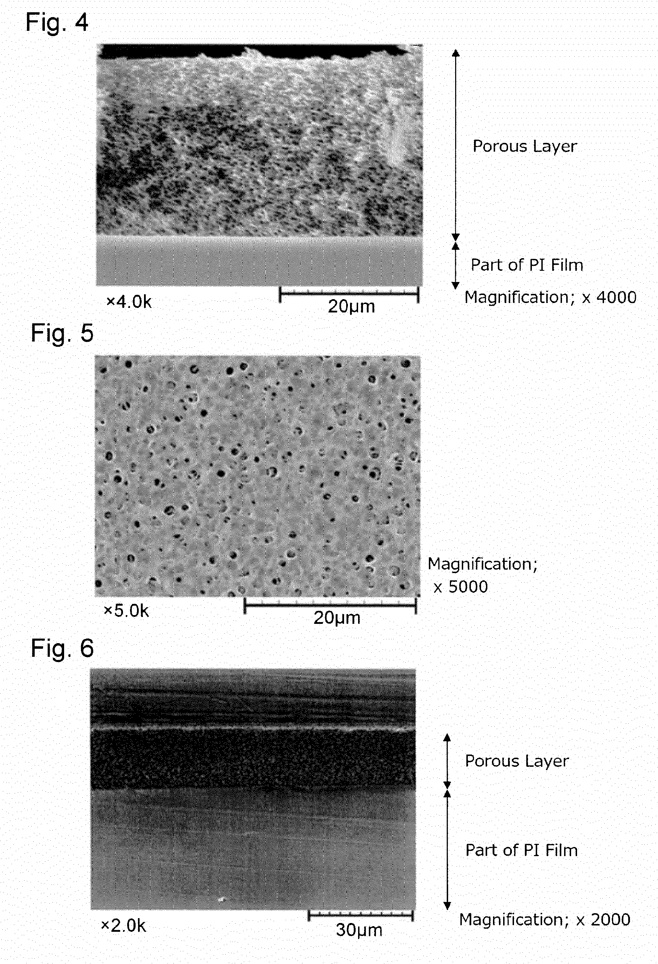

About the resultant layered body U, a tape peeling test was made. As a result, no interfacial peeling was caused between the base and the porous layer. This layered body U was observed through an electron microscope. As a result, the porous layer adhered closely to the polyimide film, and throughout the inside of the porous layer, there were substantially homogeneous fine pores having interconnection and an average pore diameter of about 0.5 μm. The porosity of the inside of the porous layer was 76%. In Fig. 3 is shown an electron microscopic photograph (power: x 5000) of the porous layer surface, and in Fig. 4 is shown an electron microscopic photograph (power: x 4000) of a cross section of the layered body.

[Example 17: porous layer layered body V]

A layered body V wherein a porous layer was layered on a base was yielded by making the same operations as in Example 16 except that a film-forming material solution was yielded by mixing the polyamideimide resin, NMP, polyvinyl pyrrolidone and the bisphenol A type epoxy resin with each other to set the ratio by weight of the polyamideimide resin/NMP/polyvinyl pyrrolidone/the bisphenol A type epoxy resin to 15/85/25/15; and instead of the polyimide film (trade name: "KAPTON 200H" manufactured by Du Pont-Toray Co., Ltd.; thickness: 50 μm), a polyimide film (trade name: "KAPTON 200H" manufactured by Du Pont-Toray Co., Ltd.; thickness: 50 μm) subjected to a plasma treatment was used as the base. The thickness of the resultant porous layer was about 21 μm, and the total thickness of the layered body was about 71 μm.

About the resultant layered body V, a tape peeling test was made. As a result, no interfacial peeling was caused between the base and the porous layer. This layered body V was observed through an electron microscope. As a result, the porous layer adhered closely to the polyimide film, and throughout the inside of the porous layer, there were substantially homogeneous fine pores having interconnection and an average pore diameter of about 0.5 μm. The porosity of the inside of the porous layer was 72%.

[Comparative Example 6: porous layer layered body W]

A layered body W wherein a porous layer was layered on a base was yielded by making the same operations as in Example 16 except that a film-forming material solution was yielded by mixing the polyamideimide resin, NMP, and polyvinyl pyrrolidone with each other to set the ratio by weight of the polyamideimide resin/NMP/polyvinyl pyrrolidone to 15/85/25 without adding any crosslinking agent to the film-forming material solution. The thickness of the resultant porous layer was about 20 μm, and the total thickness of the layered body was about 70 μm.

About the resultant layered body W, a tape peeling test was made. As a result, no interfacial peeling was caused between the base and the porous layer. This layered body W was observed through an electron microscope. As a result, the porous layer adhered closely to the polyimide film, and throughout the inside of the porous layer, there were substantially homogeneous fine pores having interconnection and an average pore diameter of about 1.0 μm. The porosity of the inside of the porous layer was 78%.

[Comparative Example 7: porous layer layered body X]

A layered body X wherein a porous layer was layered on a base was yielded by making the same operations as in Example 13 except that instead of the polyimide film (trade name: "KAPTON 200H" manufactured by Du Pont-Toray Co., Ltd.; thickness: 50 μm), a PET film (S type; thickness: 100 μm) manufactured by Teijin DuPont Films Japan Ltd. was used as the base. The thickness of the resultant porous layer was about 26 μm, and the total thickness of the layered body was about 76 μm.

About the resultant layered body X, a tape peeling test was made. As a result, no interfacial peeling was caused between the base and the porous layer. This layered body X was observed through an electron microscope. As a result, the porous layer adhered closely to the polyimide film, and throughout the inside of the porous layer, there were substantially homogeneous fine pores having interconnection and an average pore diameter of about 0.8 μm. The porosity of the inside of the porous layer was 69%.

The respective bases, and the respective porous layer components of the above-mentioned layered bodies are collectively shown in Table 1. In Table 1, abbreviations are as follows:

    PI: polyimide,
    PAI: polyamideimide, and
    PET: polyethylene terephthalate.

[Table 1]

| | | Base | Porous layer components | | Porous-layer-forming solution (ratio by weight) |
|---|---|---|---|---|---|
| | | | Polymer | Crosslinking agent | Polymer/NMP/crosslinking agent/water-soluble polymer |
| Example 1 | Layered body A | PI | PAI | YDCN-700-5 | 15/85/5/- |
| Example 2 | Layered body B | PI | PAI | YDCN-700-5 | 15/85/10/- |
| Example 3 | Layered body C | PI | PAI | YDCN-700-5 | 15/85/15/- |
| Comparative Example 1 | Layered body D | PI | PAI | - | 15/85/-/- |
| Example 4 | Layered body E | PI | PAI | jER 828 | 20/80/10/- |
| Example 5 | Layered body F | PI | PAI | jER 834 | 20/80/10/- |
| Example 6 | Layered body G | PI | PAI | jER 1001 | 20/80/10/- |

(continued)

| | | Base | Porous layer components | | Porous-layer-forming solution (ratio by weight) |
| | | | Polymer | Crosslinking agent | Polymer/NMP/ crosslinking agent/water-soluble polymer |
|---|---|---|---|---|---|
| Example 7 | Layered body H | PI | PAI | jER 1004 | 20/80/10/- |
| Example 8 | Layered body I | PI | PAI | jER 152 | 20/80/10/- |
| Comparative Example 2 | Layered body J | PI | PAI | - | 20/80/-/- |
| Example 9 | Layered body K | PI | PAI | jER 828 | 25/75/5/- |
| Example 10 | Layered body L | PI | PAI | jER 152 | 25/75/5/- |
| Comparative Example 3 | Layered body M | PI | PAI | - | 25/75/-/- |
| Example 11 | Layered body N | PI | PI | jER 828 | 15.7/84.3/10/- |
| Comparative Example 4 | Layered body O | PI | PI | - | 15.7/84.3/-/- |
| Example 12 | Layered body P | Copper foil piece | PAI | jER 828 | 20,80/10/- |
| Example 13 | Layered body Q | PI | PAI | jER 828 | 15/85/15/25 |
| Example 14 | Layered body R | PI | PAI | jER 828 | 15/85/20/25 |
| Comparative Example 5 | Layered body S | PI | PAI | - | 15/85/-/25 |
| Example 15 | Layered body T | PI | PAI | jER 828 | 15/85/10/25 |
| Example 16 | Layered body U | PI | PAI | jER 828 | 15/85/10/25 |
| Example 17 | Layered body V | PI | PAI | jER 828 | 15/85/15/25 |
| Comparative Example 6 | Layered body W | PI | PAI | - | 15/85/-/25 |
| Comparative Example 7 | Layered body X | PET | PAI | jER 828 | 15/85/15/25 |

[Heating treatment of the porous layer layered bodies]

The porous film layered body samples A to X yielded in Examples 1 to 17 and Comparative Examples 1 to 7, respectively, were each subjected to a heating crosslinking treatment as follows.

Each of the porous film layered body samples A to X was heated on a hot plate under a heating condition (a temperature and a period) shown in Table 2. The heating was conducted in the state that the sample was covered, from the upper thereof, with a basin made of aluminum and having a depth of about 20 mm to heat the whole of the sample evenly.

About each of the porous film layered body samples A to X before and after the heating crosslinking treatment, in Table 2 are shown results of the thickness ($\mu$m) of the porous layer, the adhesion evaluating test (cross-cut method) according to JIS K 5600-5-6, and the chemical resistance evaluating test (the solubility of the porous layer in NMP). In the chemical resistance in Table 2, the word "dissolved" denotes that the region of the sample where NMP dropped out was dissolved. The wording "traces remained" denotes that in the region of the sample where NMP dropped out, one or more traces thereof were recognized.

In Fig. 5 is shown an electron microscopic photograph (power: x 5000) of the porous layer surface of the sample about which the layered body F yielded in Example 5 was subjected to the heating treatment (at 200°C for 30 minutes), and in Fig. 6 is shown an electron microscopic photograph (power: x 2000) of a cross section of the sample.

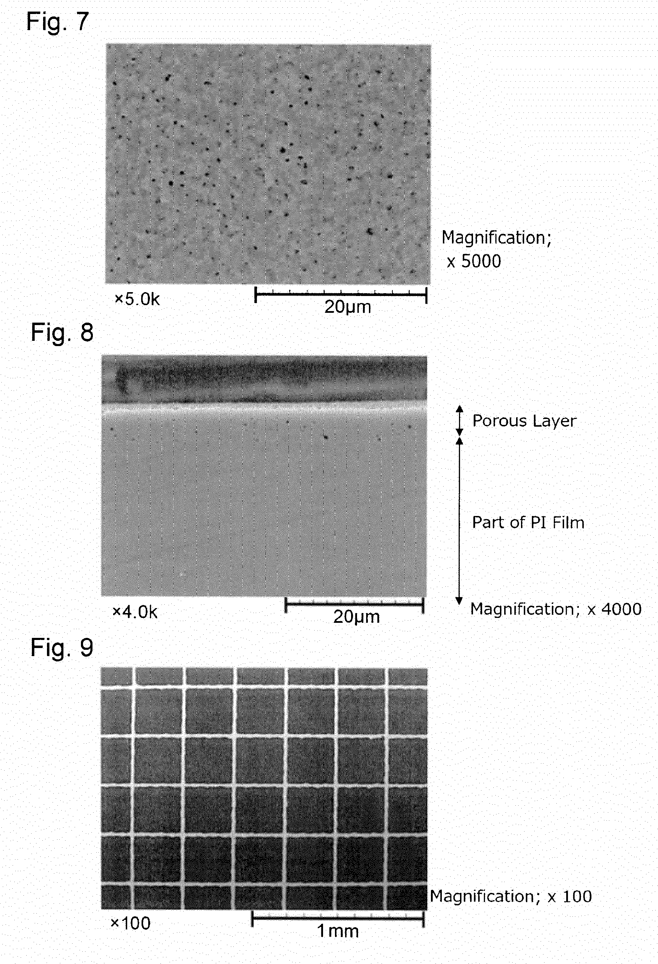

In Fig. 7 is shown an electron microscopic photograph (power: x 5000) of the porous layer surface of the sample about which the layered body U yielded in Example 16 was subjected to the heating treatment (at 200°C for 30 minutes), and in Fig. 8 is shown an electron microscopic photograph (power: x 4000) of a cross section of the sample. When Figs. 4 and 8 are compared with each other, it is observed in Fig. 8 that the film thickness of the region of the porous layer became smaller and the fine pores were substantially lost by the heating treatment so that the porous layer was transparentized (into a transparent polymeric layer originating from the porous layer).

[Table 2]

| | | Heating condition | Porous layer thickness | | Adhesion evaluation | | Chemical resistance | |
|---|---|---|---|---|---|---|---|---|
| | | | Before heating | After heating | Before heating | After heating | Before heatmg | After heating |
| Example 1 | Layered body A | 200°C for 60 minutes | 10 μm | 10 μm | 4 | 0 | Dissolved | The surface layer was slightly invaded but was not substantially dissolved |
| Example 2 | Layered body B | 200°C for 60 minute | 11 μm | 10 μm | 4 | 0 | Dissolved | Not dissolved but traces remained |
| Example 3 | Layered body C | 200°C for 60 minutes | 21 μm | 16 μm | 5 | 1 | Dissolved | Not dissolved but traces remained |
| Comparative Example I | Layered body D | 200°C for 60 minutes | 15 μm | 15 μm | 5 | 4 | Dissolved | Dissolved |
| Example 4 | Layered body E | 200°C for 30 minutes | 23 μm | 16 μm | 5 | 0 | Dissolved | Not dissolved but traces remained |
| Example 5 | Layered body F | 200°C for 30 minutes | 29 μm | 17 μm | 4 | 0 | Dissolved | Not dissolved but traces remained |
| Example 6 | Layered body G | 200°C for 30 minutes | 34 μm | 23 μm | 4 | 0 | Dissolved | Not dissolved but traces remained |
| Example 7 | Layered body H | 200°C for 30 minutes | 30 μm | 20 μm | 4 | 2 | Dissolved | The surface layer was slightly invaded but was not substantially dissolved |
| Example 8 | Layered body I | 200°C for 30 minutes | 31 μm | 19 μm | 5 | 0 | Dissolved | Not dissolved but traces remained |
| Comparative Example 2 | Layered body J | 200°C for 30 minutes | 14 μm | 14 μm | 5 | 4 | Dissolved | Dissolved |

(continued)

| | | Heating condition | Porous layer thickness | | Adhesion evaluation | | Chemical resistance | |
|---|---|---|---|---|---|---|---|---|
| | | | Before heating | After heating | Before heating | After heating | Before heatmg | After heating |
| Example 9 | Layered body K | 200°C for 30 minutes | 20 $\mu$m | 18 $\mu$m | 4 | 3 | Dissolved | The surface layer was slightly invaded but was not substantially dissolved |
| Example 10 | Layered body L | 200°C for 30 minutes | 18 $\mu$m | 17 $\mu$m | 3 | 0 | Dissolved | Not dissolved but traces remained |
| Comparative Example 3 | Layered body M | 200°C for 30 minutes | 20 $\mu$m | 18 $\mu$m | 5 | 4 | Dissolved | Dissolved |
| Example 11 | Layered body N | 200°C for 60 minutes | 35 $\mu$m | 29 $\mu$m | 5 | 0 | Dissolved | Not dissolved |
| Comparative Example 4 | Layered body O | 200°C for 60 minutes | 17 $\mu$m | 17 $\mu$m | 5 | 4 | Dissolved | Partially dissolved |
| Example 12 | Layered body P | 200°C for 60 minutes | 32 $\mu$m | 22 $\mu$m | 5 | 0 | Dissolved | Not dissolved |
| Example 13 | Layered body Q | 200°C for 30 minutes | 20 $\mu$m | 7 $\mu$m | 5 | 0 | Dissolved | Not dissolved but traces remained |
| Example 14 | Layered body R | 200°C for 30 minutes | 20 $\mu$m | 8 $\mu$m | 5 | 0 | Dissolved | Not dissolved |
| Comparative Example 5 | Layered body S | 200°C for 30 minutes | 16 $\mu$m | 16 $\mu$m | 5 | 4 | Dissolved | Dissolved |
| Example 15 | Layered body T | 200°C for 30 minutes | 7 $\mu$m | 6 $\mu$m | 2 | 0 | Dissolved | Not dissolved |
| Example 16 | Layered body U | 200°C for 30 minutes | 23 $\mu$m | 5 $\mu$m | 5 | 0 | Dissolved | Not dissolved |
| Example 17 | Layered body V | 200°C for 30 minutes | 21 $\mu$m | 6 $\mu$m | 5 | 0 | Dissolved | Not dissolved |
| Comparative Example 6 | Layered body W | 200°C for 30 minutes | 20 $\mu$m | 20 $\mu$m | 5 | 4 | Dissolved | Dissolved |

(continued)

| | | Heating condition | Porous layer thickness | | Adhesion evaluation | | Chemical resistance | |
|---|---|---|---|---|---|---|---|---|
| | | | Before heating | After heating | Before heating | After heating | Before heatmg | After heating |
| Comparative Example 7 | Layered body X | 180°C for 30 minutes | 26 μm | 9 μm | 5 | 4 | Dissolved | Not dissolved but traces remamed |

About most of the respective porous film layered body samples yielded in Examples 1 to 17, the porous layer thickness was decreased by the heating. It appears that their porous layer was shrunken by a thermal crosslinking reaction. After the heating treatment, the adhesion was made remarkably better than before the heating treatment. A remarkable improvement was made in the film strength of the porous layer (or the polymeric layer originating from the porous layer), as well as in the adhesion between the base and the porous layer (or the polymeric layer originating from the porous layer). These samples were also remarkably improved in chemical resistance.

However, about the respective porous film layered body samples yielded in Comparative Examples 1 to 6, no crosslinking agent was contained therein; thus, by the heating treatment, no improvement was made in the film strength of the porous layer (or the polymeric layer originating from the porous layer), in the adhesion between the base and the porous layer (or the polymeric layer originating from the porous layer), nor in chemical resistance.

About the porous film layered body sample yielded in Comparative Example 7, an improvement was made in chemical resistance by the heating treatment since the crosslinking agent was contained therein. However, no improvement was made in the adhesion between the base and the porous layer (or the polymeric layer originating from the porous layer).

It appears that about each of the polymers having, in the molecule thereof, an imide precursor (amic acid), an imidization reaction also advanced simultaneously by the heating treatment.

[Example 18: formation of an electroconductive pattern]

In a screen printing manner, a lattice pattern (line width: 20 μm, and pitch: 300 μm) was printed on the porous layer surface of the layered body Q [the base/the porous layer = the polyimide film (50 μm)/"the polyamideimide + jER 828 (20 μm)"] yielded in Example 13 with an electroconductive ink [silver paste, NANO DOTITE XA9053, manufactured by Fujikura Kasei Co., Ltd.] under the following conditions: a printing speed of 15 nun/sec., a printing pressure of 0.1 MPa, and a clearance of 1.5 mm. A screen printing machine used therefor was a machine, LS-150TVA, manufactured by Newlong Seimitsu Kogyo Co., Ltd. A screen plate used therein was a plate manufactured by Mesh Corp.

After the printing, the workpiece was subjected to a heating treatment at 200°C for 30 minutes to cure the electroconductive ink, thereby forming wiring. The used ink is of such a type that silver oxide is heated to be reduced into silver. Just after the printing, the printed area was black; however, after the heating, the printed area showed a luster of metallic silver. The porous layer, which had been yellowish white and opaque before the heating, was shrunken in the thickness direction when the components (the polymer and the crosslinking agent) of the layer were thermally crosslinked. Thus, the thickness was reduced from about 20 μm to about 7 μm, and the porous layer turned into a ground glass form to be in a slightly see-through state that one side thereof was slightly viewable from the other side.

In this way, an electromagnetic wave shield film was produced. The resultant electromagnetic wave shield film was observed through an electron microscope. As a result, a lattice-form electroconductive pattern was formed which had a line width of 20 μm and a pitch of 300 μm. In Fig. 9 is shown an electron microscopic photograph (power: x 100) of the electroconductive pattern.

[Example 19: formation of an electroconductive pattern]

The layered body Q yielded in Example 13 was heated on a hot plate under a heating condition of 200°C for 30 minutes to cause a reaction (thermal crosslinking) between the polymer having a crosslinkable functional group and the crosslinking agent. The heating was conducted in the state that the sample was covered, from the upper thereof, with a basin made of aluminum and having a depth of about 20 mm to heat the whole of the sample evenly. The porous layer, which had been yellowish white and opaque before the heating, was shrunken in the thickness direction when the components (the polymer and the crosslinking agent) of the layer were thermally crosslinked. Thus, the thickness was reduced from about 20 μm to about 7 μm, and the porous layer turned into a ground glass form to be in a slightly see-through state that one side thereof was slightly viewable from the other side.

Under the same conditions as in Example 18, screen printing was applied onto the porous layer surface with an electroconductive ink [silver paste, NANO DOTITE XA9053, manufactured by Fujikura Kasei Co., Ltd.]. After the printing, the workpiece was subjected to a heating treatment at 200°C for 30 minutes to cure the electroconductive ink, thereby forming wiring. Just after the printing, the printed area was black; however, after the heating, the printed area showed a luster of metallic silver.

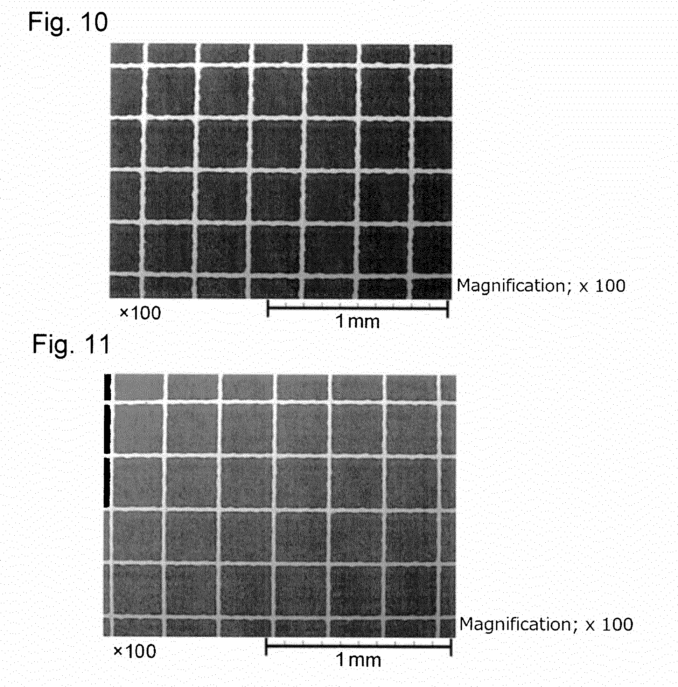

In this way, an electromagnetic wave shield film was produced. The resultant electromagnetic wave shield film was observed through an electron microscope. As a result, a lattice-form electroconductive pattern was formed which had a line width of 20 μm and a pitch of 300 μm. In Fig. 10 is shown an electron microscopic photograph (power: x 100) of the electroconductive pattern.

[Example 20: formation of an electroconductive pattern]

The layered body Q yielded in Example 13 was heated on a hot plate under a heating condition of 140°C for 5 minutes to cause a reaction (thermal crosslinking) partially between the polymer having a crosslinkable functional group and the crosslinking agent. In this way, the layered body was made into a B stage (semi-cured state). The heating was conducted in the state that the sample was covered, from the upper thereof, with a basin made of aluminum and having a depth of about 20 mm to heat the whole of the sample evenly. The porous layer, which had been yellowish white and opaque before the heating, was slightly shrunken in the thickness direction when the components (the polymer and the crosslinking agent) of the layer were partially thermally crosslinked. Thus, the thickness was reduced from about 20 μm to about 14 μm. However, the external appearance hardly changed to be kept in the yellowish white and opaque state.

Under the same conditions as in Example 18, screen printing was applied onto the porous layer surface with an electroconductive ink [silver paste, NANO DOTITE XA9053, manufactured by Fujikura Kasei Co., Ltd.]. After the printing, the workpiece was subjected to a heating treatment at 200°C for 30 minutes to cure the electroconductive ink, thereby forming wiring. Just after the printing, the printed area was black; however, after the heating, the printed area showed a luster of metallic silver. The porous layer, which had been yellowish white and opaque after the printing and before the heating, was shrunken in the thickness direction when the components (the polymer and the crosslinking agent) of the layer were thermally crosslinked. Thus, the thickness was reduced to about 7 μm, and the porous layer turned into a ground glass form to be in a slightly see-through state that one side thereof was slightly viewable from the other side.

In this way, an electromagnetic wave shield film was produced. The resultant electromagnetic wave shield film was observed through an electron microscope. As a result, a lattice-form electroconductive pattern was formed which had a line width of 20 μm and a pitch of 300 μm. In Fig. 11 is shown an electron microscopic photograph (power: x 100) of the electroconductive pattern.

[Example 21: formation of an electroconductive pattern]

In a screen printing manner, a wiring pattern in a 200-μm line and space form (L/S = 200 μm/200 μm) was printed on the layered body F [the base/the porous layer = the polyimide film (50 μm)/"the polyamideimide + jER 834 (29 μm)"] yielded in Example 5 with an electroconductive ink [silver paste, NANO DOTITE XA9053, manufactured by Fujikura Kasei Co., Ltd.] under the following conditions: a printing speed of 30 mm/sec., and a printing pressure of 0.1 MPa. A screen printing machine used therefor was a machine, LS-25TVA, manufactured by Newlong Seimitsu Kogyo Co., Ltd. After the printing, the workpiece was kept at 200°C for 30 minutes to cure the electroconductive ink, thereby forming wiring. The used ink is of such a type that silver oxide is heated to be reduced into silver. Just after the printing, the printed area was black; however, after the heating, the printed area showed a luster of metallic silver. The resultant was observed through an electron microscope. As a result, a wiring pattern wherein L/S was 200 μm/200 μm was formed.

[Example 22: formation of an electroconductive pattern]

The layered body F yielded in Example 5 was heated on a hot plate under a heating condition of 200°C for 30 minutes to cause a reaction (thermal crosslinking) between the polymer having a crosslinkable functional group and the crosslinking agent. The heating was conducted in the state that the sample was covered, from the upper thereof, with a basin made of aluminum and having a depth of about 20 mm to heat the whole of the sample evenly. The porous layer, which had been yellowish white and opaque before the heating, was slightly shrunken in the thickness direction when the components (the polymer and the crosslinking agent) of the layer were thermally crosslinked. Thus, the thickness was reduced from about 29 μm to about 17 μm. However, the external appearance hardly changed to be kept in the yellowish white and opaque state.

Under the same conditions as in Example 21, screen printing was applied onto the porous layer surface with an electroconductive ink [silver paste, NANO DOTITE XA9053, manufactured by Fujikura Kasei Co., Ltd.]. After the printing, the workpiece was kept at 200°C for 30 minutes to cure the electroconductive ink, thereby forming wiring. Just after the printing, the printed area was black; however, after the heating, the printed area showed a luster of metallic silver. The resultant was observed through an electron microscope. As a result, a wiring pattern wherein L/S was 200 μm/200 μm was formed.

[Example 23: formation of an electroconductive pattern]

The same operations as in Example 21 were made except that as the layered body, use was made of the layered body I [the base/the porous layer = the polyimide film (50 μm)/"the polyamideimide +jER 152 (31 μm)"] yielded in Example 8, so as to print a wiring pattern wherein L/S was to be 200 μm/200 μm in a screen printing manner. In this way, a wiring board was yielded. The resultant wiring board was observed through an electron microscope. As a result, the formed wiring pattern was a wiring pattern wherein L/S was 200 μm/200 μm.

[Example 24: formation of an electroconductive pattern]

In a screen printing manner, a lattice pattern (line width: 20 μm, and pitch: 300 μm) was printed on the porous layer surface of the layered body U [the base/the porous layer = the polyimide film (50 μm)/"the polyamideimide resin +jER 828 (23 μm)"] yielded in Example 16 with an electroconductive ink [silver paste, NANO DOTITE XA9053, manufactured by Fujikura Kasei Co., Ltd.] under the following conditions: a printing speed of 15 mm/sec., a printing pressure of 0.1 MPa, and a clearance of 1.5 mm. A screen printing machine used therefor was a machine, LS-150TVA, manufactured by Newlong Seimitsu Kogyo Co., Ltd. A screen plate used therein was a plate manufactured by Mesh Corp. After the printing, the workpiece was subjected to a heating treatment on a hot plate, the temperature of which was set to 200°C, for 30 minutes to cure the electroconductive ink, thereby forming wiring. The heating was conducted in the state that the sample was covered, from the upper thereof, with a basin made of aluminum and having a depth of about 20 mm to heat the whole of the sample evenly. The used ink is of such a type that silver oxide is heated to be reduced into silver. Just after the printing, the printed area was black, but after the heating, the printed area showed a luster of metallic silver. However, the film contact region was kept black. The porous layer, which had been yellowish white before the heating, was transparent. In this way, an electromagnetic wave shield film was produced. The resultant electromagnetic wave shield film was observed through an electron microscope. As a result, an electroconductive pattern was formed which was in the form of a lattice having a line width of 20 μm and a pitch of 300 μm.

By the heating treatment at 200°C for 30 minutes after the printing, the porous layer composition was softened so that the fine pores substantially disappeared, and simultaneously a crosslinking reaction was caused. The situation at this time was equivalent to that according to the electron microscopic photograph (power: x 4000) (Fig. 8) of the cross section of the sample obtained by subjecting the layered body U yielded in Example 16 to the heating treatment (at 200°C for 30 minutes).

The polyimide film (trade name: "KAPTON 200H" manufactured by Du Pont-Toray Co., Ltd.; thickness: 50 μm) had a total light transmittance (Ts) of 41.0%, the layered body U had a total light transmittance (Tsp) of 8.1 %, and in the transparentized layered body, the region where no wiring was formed had a total light transmittance (Tst) of 38.1%.

Accordingly, after the heating treatment, the transparent layer originating from the porous layer had a transparency (T) of 2.9%. The porous layer not subjected to the heating treatment had an opacity (P) of 32.9%.

The above-mentioned total light transmittances were each measured as follows:

The total light transmittance (%) was measured by use of a haze meter, NDH-5000W, manufactured by Nippon Denshoku Industries Co., Ltd. according to JIS K7136.

First, the total light transmittance (Ts) of the used base itself was measured.

The total light transmittance (Tsp) of the porous layer layered body (the base + the porous layer) not subjected to the heating treatment was then measured.

Finally, the total light transmittance (Tst) of the no-wiring-formed region of the layered body (the base + the transparent layer) transparentized by the heating treatment was measured.

The transparency (T) of the transparent layer = |the total light transmittance

(Ts) of the base itself − the total light transmittance (Tst) of the layered body (the base +

the transparent layer)|

$$\text{The opacity (P) of the porous layer} = |\text{the total light transmittance (Ts) of the base itself} - \text{the total light transmittance (Tsp) of the porous layer layered body (the base + the porous layer)}|$$

**Claims**

1. A layered body, comprising a base, and a porous layer on at least one surface of the base, wherein the base is a resin film made of at least one resin material selected from the group consisting of polyimide resins, polyamideimide resins, polyamide resins, and polyetherimide resins, or is a metal foil piece, the porous layer is made of a composition containing at least one polymer selected from the group consisting of polyimide resins, polyamideimide resins, polyamide resins, and polyetherimide resins as a main component, and a crosslinking agent, and the porous layer has fine pores having an average pore diameter of 0.01 to 10 $\mu$m, and a porosity of 30 to 85%.

2. The layered body according to claim 1, wherein the crosslinking agent is at least one selected from the group consisting of compounds each having two or more epoxy groups, polyisocyanate compounds, and silane coupling agents.

3. The layered body according to claim 1 or 2, wherein the porous layer has a thickness of 0.1 to 100 $\mu$m.

4. The layered body according to any one of claims 1 to 3, wherein the porous layer is a layer formed by casting, on the base, a solution of a porous-layer-forming material containing the polymer, which is to constitute the porous layer, and the crosslinking agent into a film form, subsequently immersing this workpiece into a coagulating liquid, and next drying the workpiece.

5. The layered body according to any one of claims 1 to 4, wherein the crosslinking agent comprised in the porous layer is in an unreacted state.

6. The layered body according to any one of claims 1 to 4, wherein the porous layer is a layer having a crosslinked structure formed with the crosslinking agent.

7. A process for producing the layered body recited in any one of claims 1 to 6, comprising:

   casting, on the base, a solution of a porous-layer-forming material containing the polymer, which is to constitute the porous layer, and the crosslinking agent into a film form;
   subsequently immersing this workpiece into a coagulating liquid; and
   next drying the workpiece.

8. The layered body-producing process according to claim 7, wherein after the solution of the porous-layer-forming material is casted into the film form on the base, the resultant workpiece is kept in an atmosphere having a relative humidity of 70 to 100% and a temperature of 15 to 100°C for 0.2 to 15 minutes, and then this workpiece is immersed in the coagulating liquid.

9. A functional laminate, comprising the layered body recited in any one of claims 1 to 4, and comprising, over the surface of the porous layer of the layered body or a polymeric layer originating from the porous layer, a functional layer selected from the group consisting of an electroconductor layer, a dielectric layer, a semiconductor layer, an electric insulator layer, and a resistor layer, wherein the porous layer or the polymeric layer originating from the porous layer has a crosslinked structure formed with the crosslinking agent.

10. The functional laminate according to claim 9, wherein the functional layer is patterned.

11. A process for producing a functional laminate comprising the layered body recited in any one of claims 1 to 4, and comprising, over the surface of the porous layer of the layered body or a polymeric layer originating from the porous layer, a functional layer selected from the group consisting of an electroconductor layer, a dielectric layer, a semiconductor layer, an electric insulator layer, and a resistor layer, comprising:

forming a layer selected from the group consisting of the electroconductor layer, the dielectric layer, the semiconductor layer, the electric insulator layer and the resistor layer, and a precursor layer thereof over the surface of the porous layer of the layered body recited in any one of claims 1 to 4; and

subjecting the resultant workpiece to a heating treatment and/or an active energy ray radiating treatment, thereby forming a crosslinked structure with the crosslinking agent in the porous layer.

12. The functional laminate according to claim 11, wherein the functional layer is patterned.

Fig. 1

×5.0k    20μm

Magnification;
x 5000

Fig. 2

Porous Layer

Part of PI Film

Magnification; x 2000

×2.0k    30μm

Fig. 3

×5.0k    20μm

Magnification;
x 5000

Fig. 4

×4.0k                20μm

Porous Layer

Part of PI Film

Magnification; x 4000

Fig. 5

×5.0k                20μm

Magnification;
x 5000

Fig. 6

×2.0k                30μm

Porous Layer

Part of PI Film

Magnification; x 2000

Fig. 7

×5.0k     20μm

Magnification;
x 5000

Fig. 8

×4.0k     20μm

Porous Layer

Part of PI Film

Magnification; x 4000

Fig. 9

×100     1mm

Magnification; x 100

Fig. 10

×100

Magnification; x 100

1mm

Fig. 11

×100

Magnification; x 100

1mm

| INTERNATIONAL SEARCH REPORT | International application No. |
|---|---|
| | PCT/JP2010/071492 |

A. CLASSIFICATION OF SUBJECT MATTER
*B32B27/34*(2006.01)i, *B32B5/18*(2006.01)i, *C08J9/28*(2006.01)i

According to International Patent Classification (IPC) or to both national classification and IPC

B. FIELDS SEARCHED

Minimum documentation searched (classification system followed by classification symbols)
B32B1/00-43/00, C08J9/00-9/42

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2007/097249 A1  (Daicel Chemical Industries, Ltd.), 30 August 2007 (30.08.2007), claims 1, 2, 7, 13, 14, 19, 26; paragraphs [0144], [0148], [0149] & EP 1995053 A1 claims 1, 2, 7, 13, 14, 19, 26; paragraphs [0145], [0149], [0150] & US 2009/0008142 A1     & CN 101384425 A & KR 10-2009-0003249 A | 1-12 |
| Y | JP 2009-73124 A  (Daicel Chemical Industries, Ltd.), 09 April 2009 (09.04.2009), claims 1, 4, 8, 9, 11, 15, 22; paragraphs [0125], [0126] (Family: none) | 1-12 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 January, 2011 (06.01.11) | 18 January, 2011 (18.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/071492 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-154273 A  (Matsushita Electric Industrial Co., Ltd.), 06 June 2000 (06.06.2000), claims; paragraphs [0007], [0021], [0022] & EP 987294 A1 claims; paragraphs [0032], [0081] to [0084] & US 6399669 B1         & DE 69921750 D & DE 69921750 T         & KR 10-2000-0023103 A | 1-12 |

Form PCT/ISA/210 (continuation of second sheet) (July 2009)

## REFERENCES CITED IN THE DESCRIPTION

### Patent documents cited in the description

- JP 2000143848 A
- JP 2000158798 A
- WO 9825997 A
- WO 2007097249 A
- JP 2004175104 A
- JP 2009073124 A
- JP 2006237322 A